# EUROPEAN PATENT APPLICATION

(11) **EP 1 475 966 A2**
(43) Date of publication of application: **10.11.2004**
(21) Application number: 04010954.8
(22) Date of filing: 07.05.2004
(51) Int. Cl.: H04N 5/85

(54) **Video recording apparatus, recording medium, video recording method, and program**

(30) Priority: 07.05.2003 JP 2003129084; 29.03.2004 JP 2004096805
(71) Applicant: NEC CORPORATION, Tokyo (JP)
(72) Inventor: Itoi, Satoshi, Minato-ku, Tokyo (JP)
(74) Representative: Betten & Resch

(57) **Abstract**

As a video stream is applied, a plurality of format information generator units generate information related to time or recording position defined by respective formats different from one another. Next, a formatter unit adds the information related to time or recording position generated by each of the plurality of format information generator units to the incoming video stream to format the video stream. Subsequently, a recorder records the information related to time or recording position added to the video stream by the formatter unit on a recording medium together with the video stream.

## Description

### BACKGROUND OF THE INVENTION

### 1. Field of the Invention:

The present invention relates to a video recording apparatus and a video recording/reproducing apparatus such as a hard disk/DVD combo-type video recorder, a DVD video recorder, a DVD stream recorder, a hard disk video recorder, a BRD recorder, and the like, and a recording medium recorded by any of those apparatuses, as well as to a video recording method, a video recording/reproducing method, and a program.

### 2. Description of the Related Art:

Conventionally, for formats of video- and stream-related applications in DVD (Digital Versatile Disc), the DVD-Forum has standardized the DVD-Video Version 1.X format exclusively for reproduction; DVD-VR (Video Recording) format which enables recording, reproduction, and editing in a simple manner; and DVD-SR (Stream Recording) format which enables direct recording and reproduction of broadcasting or transmission streams in a simple manner. Also, outside the DVD- Forum, a DVD+VR (Video Recording) format has been standardized for enabling recording, reproduction, and editing in a simple manner. Each of these formats is used for recording data on a disc which is supported by the format.

The DVD-Forum has also taken into account a new DVD-Video Version 2.0 (or HD-DVD9) video format exclusively for reproduction of HDTV, and a DVD-HDVR (High definition Video Recording) video stream recording format which also enables direct recording and reproduction of a broadcasting or transmission stream, thus resulting in a situation flooded with standards. Further, more recently, a group different from the DVD-Forum has standardized a format called "BRD" (Blue Ray Disc or Blu-ray Disc) which is different from those of the DVD.

Here, the DVD-Video Version 1.X format is exclusively for reproducing a disk which has previously recorded thereon such contents as a movie, and has its main target to the home theater. The DVD+VR format and DVD-VR format is mainly intended for digitizing analog video, and encoding the digitized video in accordance with MPEG-2 for recording, and have their main target to analog broadcasting recording and video cameras. The DVD-SR format, in turn, is provided for basically recording data sent as an MPEG stream as it is, and has its main target to digital broadcasting recording.

Further, the DVD-Video Version 2.X format is exclusively for reproducing a disk which has recorded thereon a movie in high image quality and high sound quality, including HDTV, and has its main target to the next-generation home theater. The DVD-HDVR format is intended for high image quality and high sound quality video including HDTV, and has its main target to analog broadcasting recording and next-generation digital broadcasting recording. These formats also have their main targets to a DVD disc which is compatible with a blue laser diode (LD) as well as a DVD disc which is compatible with a red LD.

Currently, the DVD-Video Version 1.X format has been globally widespread through products which employ this format, and the DVD-VR format, DVD+VR format, and the like are also becoming increasingly popular. Also, the DVD-Video Version 2.X format, DVD-SR format, and DVD-HDVR format are very promising formats in the future. Further, the BRD format includes a format exclusive to reproduction and a recording/reproducing format for a disc which is compatible with the blue LD, including HDTV.

Recently, a hard disk and a DVD recorder are combined into a combo-type HDD/DVD recorder which has been commercially available. This product digitizes analog video data applied thereto, and encodes the digitized data in accordance with MPEG-2 for recording on the hard disk or a DVD. In addition, the product is capable of dubbing data from the hard disk to a DVD, or vice versa. Here, for recording data on the hard disk, a logical format used for this purpose can be readily converted into a DVD format at a later time. Specifically, if the DVD recorder supports the DVD-VR format, data is recorded on the hard disk in the DVD-VR format. Also, if the DVD recorder supports the DVD+VR format, data is recorded on the hard disk in the DVD+VR format. Also, if the DVD recorder supports the DVD-SR format or DVD-HDVR format in the future, data will be recorded on the hard disk in the DVD-SR format or DVD-HDVR format. In this way, the dubbing of data from the hard disk to a DVD can be readily accomplished without the need for conversion of format.

Giving an example of the techniques as mentioned above, JP-2001-35083-A discloses a digital reproducing apparatus which comprises reproduction driving means for selectively reproducing a first recording medium having recorded thereon data formatted in a first format, a second recording medium having recorded thereon data formatted in a second format, and a third recording medium having recorded thereon data selectively formatted in the first format or second format; first decoding means for decoding data formatted in the first format; a second decoding means for decoding data formatted in the second format; and reproduction control means for selectively driving the first decoding means such that the first decoding means decodes data when the digital reproducing apparatus is used as a player for the first recording medium, selectively driving the second decoding means such that the second decoding means decodes data when the digital reproducing apparatus is used as a player for the second recording medium, and selectively driving the first or second decoding means such that the first or second decoding means decodes data, when the digital reproducing apparatus is used as a player for the third recording medium, in accordance with a format in which the third recording medium is recorded, thereby selectively reproducing data recorded on three types of recording media which differ from one another in the recording/reproducing scheme and format. JP-2001-35083-A also discloses a digital recording apparatus which comprises recording driving means for recording data on a recording medium selectively formatted in a first format or a second format; an input interface for receiving stream data transferred thereto from the outside; first encoding means for formatting the stream data received by the input interface in the first format; second encoding means for formatting the stream data received by the input interface in the second format; and recording control means for selectively controlling the recording driving means to record the stream data received through the input interface and formatted by the first encoding means on a recording medium when the digital recording apparatus is used as a recording apparatus compatible with the first format and to record the stream data received through the input interface and formatted by the second encoding means on a recording medium when the digital recording apparatus is used as a recording apparatus compatible with the second format, thereby selectively recording data on a recording medium in accordance with a video standard or an audio standard.

However, a video recording/reproducing apparatus such as a HDD/DVD video recorder for recording data in such formats has the following problems.

In the future where a drive supports many types of discs, when data originally recorded on a hard disc in a certain format is dubbed from the hard disc to a DVD forcibly in a different format, the dubbing will involve complicated conversion from one format to another. For example, when data recorded on a hard disk in the DVD+VR format is to be dubbed onto a DVD in the DVD-VR format, or when data recorded on a hard disk in the DVD-VR format is to be dubbed onto a DVD in the DVD-SR format, such a dubbing operation will involve a multiplicity of calculations, and experience difficulties in achieving high speed conversion. In addition, the CPU will be occupied in a larger proportion for the conversion of format, and therefore will be hindered from performing other concurrent recording and reproducing operations.

The foregoing applies to the DVD-HDVR format which is intended for HDTV. The DVD-HDVR format is a new format which is not compatible with conventional formats such as the DVD+VR format, DVD-VR format, DVD-SR format, and the like. Therefore, if data recorded on a DVD disc in the DVD-HDVR format is to be converted into data in another format such as the DVD-Video Version 1.X format, DVD+VR format, DVD-VR format, DVD-SR format or the like in order to dub the data on a conventional DVD disc, the dubbing will involve complicated conversion of format, and experience difficulties in achieving high speed conversion, as is the case with the foregoing. In addition, the CPU will be occupied in a larger proportion for the conversion of format, and therefore will be hindered from performing other concurrent recording and reproducing operations. Such a situation will be seen as well when the aforementioned BRD format is added.

### SUMMARY OF THE INVENTION

It is an object of the present invention to provide a video recording apparatus, a recording medium, a video recording method, and a computer program which are capable of facilitating conversion from one format to another for a video stream recorded on a recording medium.

In the present invention, as a video stream is applied to a video recording apparatus, a plurality of format information generator means generate information related to time or recording position defined by respective formats different from one another. Next, formatting means adds the information related to time or recording position generated by each of the plurality of format information generator means to the incoming video stream to format the video stream. Subsequently, recording means records the information related to time or recording position added to the video stream by the formatting means on a recording medium together with the video stream.

Also, as a video stream is applied to a video recording apparatus, first format information generating means generates information related to time or recording position defined by a predetermined first format for the incoming video stream. Next, formatting means adds the information related to time or recording position generated by the first format information generating means to the incoming video stream to format the video stream in the first format. Also, a second format information generating means generates information related to time or recording position defined by a second format different from the first format for the incoming video stream. Subsequently, information adding means adds the information related to time or recording position generated by the second format information generating means to the video stream formatted by the formatting means. Recording means records the information related to time or recording position added to the video stream formatted by the information adding means on a recording medium together with the formatted video stream.

For converting a video stream recorded on a recording medium in a format in accordance with the type of the recording medium into another format, converting means first converts information related to time or recording position defined by the format for the video stream into information related to time or recording position defined by a format in accordance with the type of another recording medium loaded into a video recording apparatus. Next, formatting means adds the information related to time or recording position converted by the converting means to the video stream to convert the format of the video stream.

Also, as a video stream is applied to a video recording apparatus, format information generating means generates information related to time or recording position defined by a format of the video stream for the video stream. Next, formatting means adds the information related to time or recording position generated by the format information generating means to the incoming video stream to format the video stream. Here, play list file creating means creates a play list file built in a file form independent of the video stream for specifying an order of reproducing video streams recorded on a recording medium on which the video stream is to be recorded. The formatting means adds the play list file created by the play list file creating means to the formatted video stream. Subsequently, recording means records the video stream formatted by the formatting means and the play list file added thereto on a recording medium.

Also, as a video stream is applied to a video recording apparatus, format setting means sets a format in accordance with an incoming video stream. Format information generating means generates information related to time or recording position defined by the format set by the format setting means for the incoming video stream. Next, formatting means adds the information related to time or recording position generated by the format information generating means to the incoming video stream to format the video stream. Subsequently, recording means records the video stream formatted by the formatting means on a recording medium.

Also, format setting means sets a format in accordance with the type of a recording medium on which a video stream is to be recorded. As the video stream is applied, format information generating means generates information related to time or recording position defined by the format set by the format setting means for the incoming video stream. Next, formatting means adds the information related to time or recording position generated by the format information generating means to the incoming video stream to format the video stream. Subsequently, recording means records the video stream formatted by the formatting means on a recording medium.

The above and other objects, features, and advantages of the present invention will become apparent from the following description with reference to the accompanying drawings which illustrate an example of the present invention.

### BRIEF DESCRIPTION OF THE DRAWINGS

Fig. 1 is a block diagram illustrating one embodiment of a video recording/reproducing apparatus according to the present invention;
Fig. 2 is a diagram illustrating how a DVD recorder records video and audio data, which has been multi-formatted by a recording formatter unit shown in Fig. 1, on a DVD;
Fig. 3 is a diagram for describing the processing involved in editing and reproducing a disc recorded by a DVD recorder shown in Fig. 1 in another compatible DVD drive;
Fig. 4 is a diagram showing an exemplary structure of DVD-Video and DVD+VR;
Fig. 5 is a diagram showing an exemplary structure of DVD-VR (DVD-HDVR);
Fig. 6 is a diagram showing exemplary time map information of DVD-VR (DVD-HDVR);
Fig. 7 is a diagram showing an exemplary DVD-SR format;
Fig. 8 is a diagram showing SOB0 and IAPAT in the DVD-SR format;
Fig. 9 is a diagram showing AUSM and AUEM;
Fig. 10 is a diagram showing a pack for video, audio, and sub-picture defined by DVD-Video, DVD+VR, DVD-VR, and DVD-HDVR;
Fig. 11 is a diagram showing a stream pack defined by DVD-SR;
Fig. 12 is a diagram showing, by way of example, how the video pack shown in Fig. 11 is generated from the stream pack shown in Fig. 10;
Fig. 13 is a diagram showing an exemplary DVD multi-logical format;
Fig. 14 is a diagram for describing in detail the DVD multi-logical format;
Fig. 15 is a diagram showing data which must be recorded as the DVD multi-logical format;
Fig. 16 is a diagram showing data which can be recorded as the DVD multi-logical format in addition to the data shown in Fig. 15;
Fig. 17 is a block diagram illustrating a second embodiment of the video recording/reproducing apparatus according to the present invention;
Fig. 18 is diagram illustrating how a DVD recorder records on a DVD video/audio data formatted by a recording formatter unit shown in Fig. 17, and information related to time or recording position added to the video/audio data in an information adder unit;
Fig. 19 is a block diagram illustrating a third embodiment of the video recording/reproducing apparatus according to the present invention;
Fig. 20 is a diagram showing how a DVD recorder records on a DVD video/audio data formatted by a recording formatter unit shown in Fig. 19, and a play list file created in a play list file creation unit;
Fig. 21 is a block diagram illustrating a fourth embodiment of the video recording apparatus according to the present invention; and
Fig. 22 is a diagram illustrating an exemplary video recording apparatus for setting a format in accordance with the type of a DVD on which video/audio data is to be recorded.

### DETAILED DESCRIPTION OF THE PREFERRED EMBODIMENTS

### (First Embodiment)

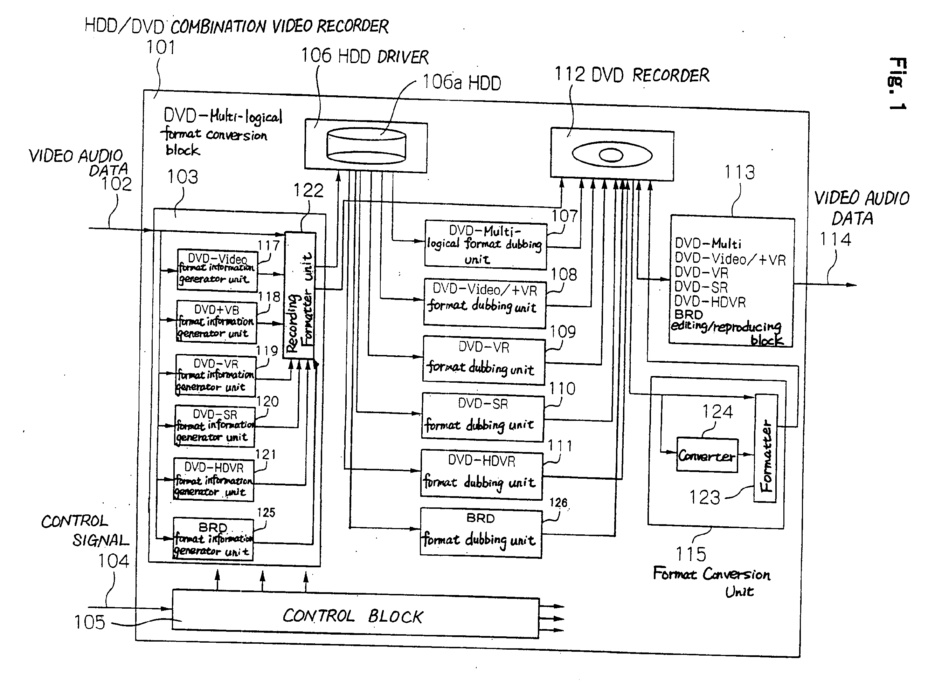

Fig. 1 is a block diagram illustrating a first embodiment of a video recording/reproducing apparatus according to the present invention, specifically, HDD/DVD combination video recorder 11 which supports a DVD multi-logical format.

As illustrated in Fig. 1, HDD/DVD combination video recorder 101 of this embodiment comprises DVD multi-logical format conversion block 103; HDD driver 106 for recording video/audio data 102 on hard disk 106a which serves as a recording medium; DVD recorder 112 for recording video/audio data 102 on a DVD which is a recording medium; DVD multi-logical format dubbing unit 107; DVD-Video/+VR format dubbing unit 108; DVD-VR format dubbing unit 109; DVD-SR format dubbing unit 110; DVD-HDVR format dubbing unit 111; BRD format dubbing unit 126; control block 105; DVD multi, DVD+VR, DVD-VR, DVD-SR, DVD-HDVR, BRD editing/reproducing block 113; and a format conversion unit 115.

DVD-multi-logical format conversion block 103 converts video/audio data 102, which is an incoming video stream, into a DVD multi-logical format, and comprises DVD-Video format information generator unit 117 for generating information related to time or recording position defined by the DVD-Video Version 1.X format or DVD-Video Version 2.X format for incoming video/audio data 102; DVD+VR format information generator unit 118 for generating information related to time or recording position defined by the DVD+VR format for incoming video/audio data 102; DVD-VR format information generator unit 119 for generating information related to time or recording position defined by the DVD-VR format for incoming video/audio data 102; DVD-SR format information generator unit 120 for generating information related to time or recording position defined by the DVD-SR format for incoming video/audio data 102; DVD-HDVR format information generator unit 121 for generating information related to time or recording position defined by the DVD-HDVR format for incoming video/audio data 102; BRD format information generator unit 125 for generating information related to time or recording position defined by the BRD format for incoming video/audio data 102; and recording formatter unit 122 for adding the information related to time or recording position generated by DVD-Video format information generator unit 117, DVD+VR format information generator unit 118, DVD-VR format information generator unit 119, DVD-SR format information generator unit 120, DVD-HDVR format information generator unit 121, and BRD format information generator unit 125, to incoming video/audio data 102 to make video/audio data 102 compatible with multiple formats (multi-format video/audio data 102.

HDD driver 106 records the video/audio data, which has been made multi-formatted by recording formatter unit 122, on hard disk 106a, while DVD recorder 112 records the video/audio data, which has been multi-formatted by recording formatter unit 122, on a DVD loaded therein.

DVD multi-logical format dubbing unit 107 instructs DVD recorder 112 to dub video/audio data recorded on hard disk 106a to a DVD in the DVD multi-logical format as it is.

DVD-Video/+VR format dubbing unit 108 converts the format of video/audio data recorded on hard disk 106a into the DVD-Video Version 1.X format, DVD-Video Version 2.X format, or DVD+VR format, such that DVD recorder 112 can dub the format converted video/audio data to a DVD in any of the above formats.

DVD-VR format dubbing unit 109 converts the format of video/audio data recorded on hard disk 106a into the DVD-VR format, such that DVD recorder 112 can dub the format converted video/audio data to a DVD in the DVD-VR format.

DVD-SR format dubbing unit 110 converts the format of video/audio data recorded on hard disk 106a into the DVD-SR format, such that DVD recorder 112 can dub the format converted video/audio data to a DVD in the DVD-SR format.

DVD-HDVR format dubbing unit 111 converts the format of video/audio data recorded on hard disk 106a into the DVD-HDVR format, such that DVD recorder 112 can dub the format converted video/audio data to a DVD in the DVD-HDVR format.

BRD format dubbing unit 126 converts the format of video/audio data recorded on hard disk 106a into the BRD format, such that DVD recorder 112 can dub the format converted video/audio data to a DVD in the BRD format.

DVD multi, DVD+VR, DVD-VR, DVD-SR, DVD-HDVR, BRD editing/reproducing block 113 is responsible for editing, reproduction, and the like of video/audio data recorded on a DVD.

Format conversion unit 115, which converts the format of video/audio data recorded on a DVD, when it is recorded on another DVD, in accordance with the type of the other DVD, comprises a converter 124 for converting information on time or recording position defined by a format in accordance with the type of the DVD which has video/audio data recorded thereon into information related to time or recording position defined by a format in accordance with the type of the other DVD; and formatter 123 for adding the information related to time or recording position converted by converter 124 to the video/audio data recorded on the DVD to format the resulting video/audio data in the format associated with the other DVD.

The following description will be centered on the operation of HDD/DVD combination video recorder 101 which is configured as described above.

As video/audio data 102 is applied from the outside, incoming video/audio data 102 is first applied to DVD-Video format information generator unit 117, DVD+VR format information generator unit 118, DVD-VR format information generator unit 119, DVD-SR format information generator unit 120, DVD-HDVR format information generator unit 121, BRD format information generator unit 125, and recording formatter unit 122 of DVD multi-logical format conversion block 103.

In response, DVD-Video format information generator unit 117 generates information related to time or recording position defined by the DVD-Video Version 1.X format or DVD-Video Version 2.X format for incoming video/audio data 102. DVD+VR format information generator unit 118 generates information related to time or recording position defined by the DVD+VR format for incoming video/audio data 102. DVD-VR format information generator unit 119 generates information related to time or recording position defined by the DVD-VR format for incoming video/audio data 102. DVD-SR format information generator unit 120 generates information related to time or recording position defined by the DVD-SR format for incoming video/audio data 102. DVD-HDVR format information generator unit 121 generates information related to time or recording position defined by the DVD-HDVR format for incoming video/audio data 102. BRD format information generator unit 125 generates information related to time or recording position defined by the BRD format for incoming video/audio data 102. The information related to time or recording position generated by DVD-Video format information generator unit 117, DVD+VR format information generator unit 118, DVD-VR format information generator unit 119, DVD-SR format information generator unit 120, DVD-HDVR format information generator unit 121, and BRD format information generator unit 125 may be, for example, information indicative of the time at which the data was generated, information indicative of the position at which the data is recorded, information on the relationship between the picture type and recording position, information on the relationship between a video or audio or sub-picture and a recording position, information indicative of the position at which recording is started or ended for each video data compression unit, information on the relationship between certain recording units, information indicative of the start of recording, generated each time recording is started, to name a few. In regard with the information as listed above, assuming, for example, that the type of stream is defined to be a video/audio stream; a collection of data recorded at one time to be VOB (Video Object); a collection of data recorded at one time as a broadcasting or transmission stream to be SOB (Stream Object); a collection of fixed video field data to be TMU (Time Map Unit); a collection of one or more GOP (Group Of Pictures) data in a recordable/reproducible stream to be VOBU (Video Object Unit); a collection of one or more GOP data in a recordable/reproducible stream recorded as a broadcasting or transmission stream to be SOBU_HD (Stream Object Unit_HD); a collection of fixed bit-number data to be SOBU (Stream Object Unit); and a collection of fixed bit-number data of another value to be PacketGroup, the information indicative of the time at which the data was generated may include a VOB start time, a SOB start time, a TMU start time, a VOBU start time, a SOBU_HD start time, a SOBU start time, a PacketGroup start time, VOBU_PB_TM defined by the DVD-VR format or DVD-HDVR format, IAPAT (Incremental Packet Arrival Time) defined by the DVD-SR format, and PATS (Packet Arrival Time Stamp) defined by the DVD-HDVR format; the information indicative of the position at which the data is recorded may include a VOB address, a SOB address, a TMU address, a VOBU address, a SOBU_HD address, a SOBU address, a PacketGroup address, VTS_VOBU_SA, FWDI, BWDI defined by DVD-Video Version 1.X, DVD-Video Version 2.X or DVD+VR format, and VOBU_SZ defined by the DVD-VR or DVD-HDVR format; the information on the relationship between the picture type and recording position may include VOBU_1STRF_EA, VOBU_2NDREF_EA, VOBU_3RDREF_EA defined by the DVD-Video Version 2.X format or DVD+VR format, and ISTREF_SZ defined by the DVD-VR format or DVD-HDVR format; the information on the relationship between video or audio or sub-picture and recording position may include A_SYNCA, SP_SYNCA defined by the DVD-Video Version 1.X format, DVD-Video Version 2.X format or DVD+VR format; the information indicative of the position at which recording is started or ended for each video data compression unit may include AUSM, AUEM defined by the DVD-SR format; the information on the relationship between certain recording units may include TM_DIFF, VOBU_ENTN, VOBU_ADR defined by the DVD-VR format or DVD-HDVR format; and the information indicative of the start of recording, generated each time recording is started, may include TM_ENTNs, VOBU_ENT_Ns, TM_OFS, ADR_OFS defined by the DVD-VR format or DVD-HDVR format. Detailed description will be given later on information generated for the respective formats.

As described above, DVD-Video format information generator unit 117, DVD+VR format information generator unit 118, DVD-VR format information generator unit 119, DVD-SR format information generator unit 120, DVD-HDVR format information generator unit 121, and BRD format information generator unit 125 of DVD multi-logical format conversion block 103 generate the information related to time or recording position defined by the associated formats different from one another. Such formats may be classified into a format which supports a stream exclusive to reproduction; a format which supports a recordable/reproducible stream; and a format which support a recordable/reproducible stream which is recorded as a broadcasting or transmission stream. At least three types can be set for the stream exclusive to reproduction, wherein a first type is designated by a stream conforming to the DVD-Video Version 1.X; a second type is designated by a stream conforming to the DVD-Video Version 2.X or HD-DVD9; and a third type is designated by a stream conforming to the BRD format. At least four types can be set for the recordable/reproducible stream, wherein a first one of the four types is designated by a stream conforming to the DVD+VR format; a second type is designated by a stream conforming to the DVD-VR format; a third type is designated by a stream conforming to the DVD-HDVR; and a fourth type is designated by a stream conforming to the BRD format. At least three types can be set for the recordable/reproducible stream recorded as a broadcasting or transmission stream, where a first type is designated by a stream conforming to the DVD-SR format; a second type is designated by a stream conforming to the DVD-HDVR format; and a third type is designated by a stream conforming to the BRD stream.

Next, the recording formatter unit 122 adds the information related to time or recording position, generated by DVD-Video format information generator unit 117, DVD+VR format information generator unit 118, DVD-VR format information generator unit 119, DVD-SR format information generator unit 120, DVD-HDVR format information generator unit 121, and BRD format information generator unit 125, to incoming video audio data 102, so that video/audio data 102 is made compatible with multiple formats.

Subsequently, the video/audio data, which has been made compatible with multiple formats by recording formatter unit 122, is recorded on hard disk 106a in HDD driver 106, or recorded on a DVD by DVD recorder 112 under the control of control block 105 which receives control signal 104.

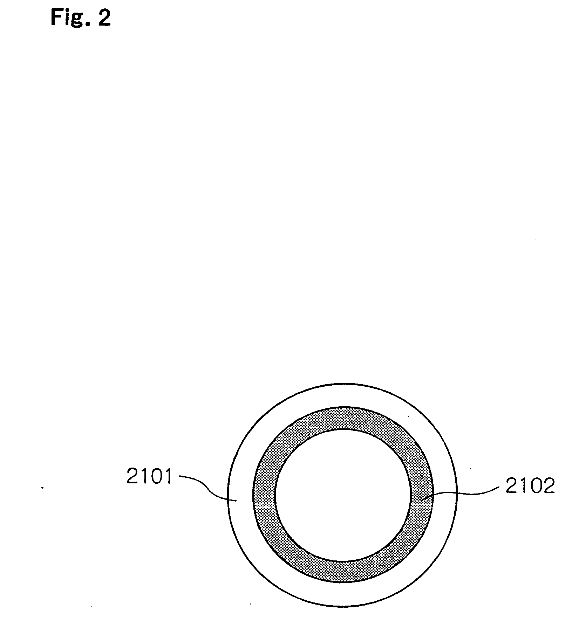

Fig. 2 illustrates how DVD recorder 112 records the video/audio data, which has been multi-formatted by recording formatter unit 122 shown in Fig. 1, on a DVD.

As illustrated in Fig. 2, DVD 2101, on which video/audio data is to be recorded by DVD recorder 112, has recording area 2102 reserved for recording formatted video/audio data, so that video/audio data multi-formatted by recording formatter unit 122 is recorded in this recording area 2102. Specifically, recorded in recording area 2102 are video/audio data 102 as well as the information related to time or recording position, added to video/audio data 102, which has been generated by DVD-Video format information generator unit 117, DVD+VR format information generator unit 118, DVD-VR format information generator unit 119, DVD-SR format information generator unit 120, DVD-HDVR format information generator unit 121, and BRD format information generator unit 125.

Each of DVD-Video format information generator unit 117, DVD+VR format information generator unit 118, DVD-VR format information generator unit 119, DVD-SR format information generator unit 120, DVD-HDVR format information generator unit 121, and BRD format information generator unit 125 may generate temporal information on the relationship between recording units and temporal information per fixed recording unit, defined by the respective formats associated therewith, and at least one of the temporal information on the relationship between recording units and temporal information per fixed recording unit may be recorded on hard disk 106a in HDD driver 106 or recorded on a DVD by DVD recorder 112 as additional information. In this event, the temporal information on the relationship between recording units may include a time difference between the head of SOBU or PacketGroup and the head of TMU; a SOBU or PacketGroup number at the head of TMU; a start address of SOBU or PacketGroup at the head of TMU; a time difference between the head of SUB or PacketGroup and the head of VOBU; a SOBU or PacketGroup number at the head of VOBU; a start address of SOBU or PacketGroup at the head of VOBU; a time difference between the head of SOBU or PacketGroup and the head of SOBU_HD; a SOBU or PacketGroup number at the head of SOBU_HD; and a start address of SOBU or PacketGroup at the head of SOBU_HD, while the temporal information per fixed recording unit may include temporal information or the number of frames or the number of fields per SOBU or PacketGroup.

The video/audio data recorded on hard disk 106a by HDD driver 106 is dubbed to a DVD by DVD recorder 112 under the control of control block 105. In this event, when the video/audio data recorded on hard disk 106a is recorded on the DVD by DVD recorder 112, DVD multi-logical format dubbing unit 107 maintains the video/audio data in the DVD multi-logical format; or DVD-Video/+VR format dubbing unit 108 converts the video/audio data into the DVD-Video Version 1.X, Version 2.X or DVD+VR format; or DVD-VR format dubbing unit 109 converts the video/audio data into the DVD-VR format; or DVD-SR format dubbing unit 110 converts the video/audio data into the DVD-SR format; or DVD-HDVR format dubbing unit 111 converts the video/audio data into DVD-HDVR format; or BRD format dubbing unit 126 converts the video/audio data into the BRD format.

Here, control block 15 determines or selects whether the video/audio data recorded on hard disk 106a by HDD driver 106 is converted in DVD multi-logical format dubbing unit 107 or DVD-Video/+VR format dubbing unit 108 or DVD-VR format dubbing unit 109 or DVD-SR format dubbing unit 110 or DVD-HDVR format dubbing unit 111 or BRD format dubbing unit 126. Alternatively, an appropriate format conversion block is automatically determined in accordance with the type of a DVD to which video/audio data is to be dubbed. For example, when DVD recorder 112 is loaded with a DVD+RW disc, the DVD+VR format is automatically selected; when DVD recorder 112 is loaded with a DVD-RW disc, the DVD-VR format or DVD-SR format is automatically selected; when DVD recorder 112 is loaded with a blue LD compatible DVD rewritable disc, the DVD-HDVR format is automatically selected; and so on. Also, when DVD recorder 112 is loaded with a DVD-RW disc, and is applied with analog data, the DVD-VR format may be automatically selected; when DVD recorder 112 is loaded with a DVD-RW disc and applied with digital data, the DVD-SR format may be automatically selected; when DVD recorder 112 is loaded with a BRD disc, the BRD format may be automatically selected. In addition, when DVD recorder 112 is loaded with a blue LD compatible DVD rewritable disc and applied with analog data, a VOB recording mode may be automatically selected in the DVD-HDVR format; or when DVD recorder 112 is loaded with a blue LD compatible DVD rewritable disc and applied with digital data, a SOB recording mode may be automatically selected in he DVD-HDVR format. Here, generally speaking, the VOB recording mode is regarded as a format suitable for recording digitized analog input, while the SOB recording mode is regarded as a format suitable for directly recording digital input.

Alternatively, the aforementioned dubbing operation may be performed between DVDs loaded into DVD recorder 112. In this event, video/audio data recorded on a DVD loaded into DVD recorder 112 may be once recorded on hard disk 106a, and then, another DVD may be loaded into DVD recorder 112 for dubbing the video/audio data recorded on hard disk 106a to the DVD loaded in DVD recorder 112, or a plurality of DVD recorders 112 may be provided such that video/audio data is directly dubbed from one DVD to another, loaded into the plurality of DVD recorders 112, respectively.

The video/audio data recorded on the DVD by DVD recorder 112 is edited and reproduced in the same recorder 112 or in another compatible DVD drive.

When the video/audio data recorded on the DVD by DVD recorder 112 is edited and reproduced by DVD recorder 112, the video/audio data is edited and reproduced in DVD multi, DVD+VR, DVD-VR, DVD-SR, DVD-HDVR, BRD editing/reproducing block 113. When the video/audio data is edited, the resulting edited video/audio data is written back into the DVD. When the video/audio data is reproduced, the reproduced data is delivered as video/audio data 114.

It should be noted that description in Fig. 1 is omitted for editing and reproduction of video/audio data recorded on hard disk 106a in HDD driver 106, a write-back operation of video/audio data from DVD recorder 112 to hard disk 106a by HDD driver 106, and the like.

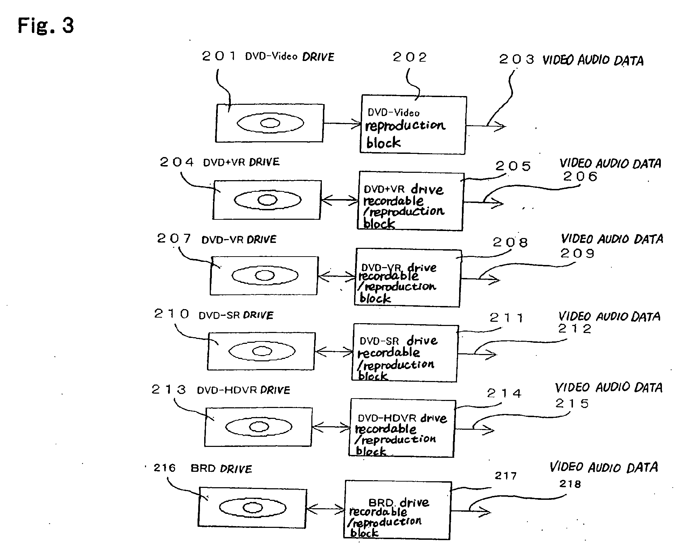

Fig. 3 is a diagram for describing the processing involved in editing and reproducing video/audio data recorded on a DVD by DVD recorder 112 shown in Fig. 1 in another compatible DVD drive.

As illustrated in Fig. 3, video/audio data recorded on a DVD by DVD recorder 112 in the DVD-Video Version 1.X, Version 2.X or DVD+VR format is reproduced by DVD-Video Version 1.X or Version 2.X drive 201 exclusive to reproduction and DVD-Video Version 1.X or Version 2.X reproduction block 202, such that reproduced data is delivered as video/audio data 206.

Video/audio data recorded on a DVD by DVD recorder 112 in the DVD-Video Version 1.X, Version 2.X or DVD+VR format is edited and reproduced in recordable/reproducible DVD+VR drive 204 and DVD+VR editing/reproduction block 205, such that the edited video/audio data is written back into the DVD, and the reproduced data is delivered as video/audio data 206.

Video/audio data recorded on a DVD by DVD recorder 112 in the DVD-VR format is edited and reproduced in recordable and reproducible DVD-VR drive 207 and DVD-VR editing/reproduction block 208, such that the edited video/audio data is written back into the DVD, and the reproduced data is delivered as video/audio data 209.

Video/audio data recorded on a DVD by DVD recorder 112 in the DVD-SR format is edited and reproduced in recordable/ reproducible DVD-SR drive 210 and DVD-SR editing/reproduction block 211, such that the edited video/audio data is written back into the DVD, and the reproduced data is delivered as video/audio data 212.

Video/audio data recorded on a DVD by DVD recorder 112 in the DVD-HDVR format is edited and reproduced in recordable/ reproducible DVD-HDVR drive 213 and DVD-HDVR editing/reproduction block 214, such that the edited video/audio data is written back into the DVD, and the reproduced data is delivered as video/audio data 215.

Video/audio data recorded on a DVD by DVD recorder 112 in the BRD format is edited and reproduced in BRD drive 216 and BRD drive editing/reproduction block 217, such that the edited video/audio data is written back into the DVD, and the reproduced data is delivered as video/audio data 218.

Format conversion nit 115 can also convert the format, when video/audio data recorded on one DVD is duplicated on another DVD, in accordance with the type of the other DVD.

For example, contents recorded in the DVD-Video format may be rewritten and recorded in accordance with the DVD-HDVR format for the information related to time or recording position.

In the format conversion unit 115, first, converter 124 converts information related to time or recording position defined by a format in accordance with the type of a DVD on which video/audio data has been recorded by DVD recorder 112 into information related to time or recording position defined by a format in accordance with another type of DVD. Subsequently, the formatter 123 adds the information related to time or recording position, converted by converter 124, to the video/audio data recorded on the DVD by DVD recorder 112, so that the video/audio data is formatted.

In this event, the information related to time or recording position may be selected from a group comprising a VOB start time, a SOB start time, a TMU start time, a VOBU start time, a SOBU_HD start time, a SOBU start time, a PacketGroup start time, a VOB address, a SOB address, a TMU address, a VOBU address, a SOBU_HD address, a SOBU address, and a PacketGroup address; VTS_VOBU_SA, VOBU_EA, VOBU_1STREF_EA, VOBU_2NDREF_EA, VOBU_3RDREF_EA, FWDI, BWDI, A_SYNCA, SP_SYNCA conforming to the DVD-Video Version 1.X format and DVD-Video Version 2.X format; VTS_VOBU_SA, VOBU_1STREF_EA, VOBU_2NDREF_EA, VOBU_3RDREF_EA, VOBU_EA, FWDI, BWDI, A_SYNCHA, SP_SYNCA conforming to the DVD+VR format, TM_ENT_Ns, VOBU_ENT_Ns, TM_OFS, ADR_OFS, TM_DIFF, VOBU_ENTN, VOBU_ADR, 1STREF_SZ, VOBU_PB_TM, VOBU_SZ conforming to the DVD-VR format or DVD-HDVR format; IAPAT, AUSM, AUEM conforming to the DVD-SR format; and PATS conforming to the DVD-HDVR format, and converter 124 may convert a piece of information defined by a format in accordance with the type of a DVD on which the video/audio data has been recorded by DVD recorder 112 into information defined by a format in accordance with the type of the other DVD.

Also, converter 124 may convert the temporal information on the relationship between recording units and temporal information per fixed recording unit defined by a format in accordance with the type of the DVD on which the video/audio data has been recorded by DVD recorder 112 into information defined by a format in accordance with the type of the other DVD, and DVD recorder 112 may record at least one of the temporal information on the relationship between recording units and temporal information per fixed recording unit converted by converter 124 as additional information on the other DVD. In this event, DVD recorder 112 records on the DVD a video stream conforming to the DVD-Video Version 1.X format, or DVD-Video Version 2.X format, or DVD+VR format, or DVD-VR format, or DVD-SR format, or DVD-HDVR format, and may also record on the DVD addition information which may be at least one selected from a time difference between the head of SOBU or PacketGroup and the head of TMU; a SOBU or PacketGroup number at the head of TMU; a start address of SOBU or PacketGroup at the head of TMU; a time difference between the head of SUB or PacketGroup and the head of VOBU; a SOBU or PacketGroup number at the head of VOBU; a start address of SOBU or PacketGroup at the head of VOBU; a time difference between the head of SOBU or PacketGroup and the head of SOBU_HD; a SOBU or PacketGroup number at the head of VOBU, a start address of SOBU or PacketGroup at the head of VOBU, a time difference between the head of SOBU or PacketGroup and the head of SOBU_HD, a SOBU or PacketGroup number at the head of SOBU_HD, a start address of SOBU or PacketGroup at the head of SOBU_HD, and temporal information, the number of frames, or the number of fields per SOBU or PacketGroup.

In this way, the video recording/reproducing apparatus of this embodiment comprises format conversion unit 115 which includes converter 124 for converting information related to time or recording position defined by a format for video/audio data recorded on a DVD into information related to time or recording position defined by a format in accordance with the type of another DVD; and formatter 123 for adding the information related to time or recording position converted in converter 124 to the video/audio data to convert the format of the video/audio data. The video recording/reproducing apparatus can therefore readily convert video/audio data recorded on a DVD from a format associated with this DVD into a format in accordance with the type of a DVD on which the video/audio data is to be recorded.

Next, the aforementioned formats will be described below in detail.

First described is the DVD-Video Version 1.X, Version 2.X or DVD+VR format.

DVD-Video Version 1.X, Version 2.X do not include user data for fast search. Formats available for DVD+VR include the DVD+VR format which does not include user data for fast search, and the DVD+VR format which includes user data for fast search.

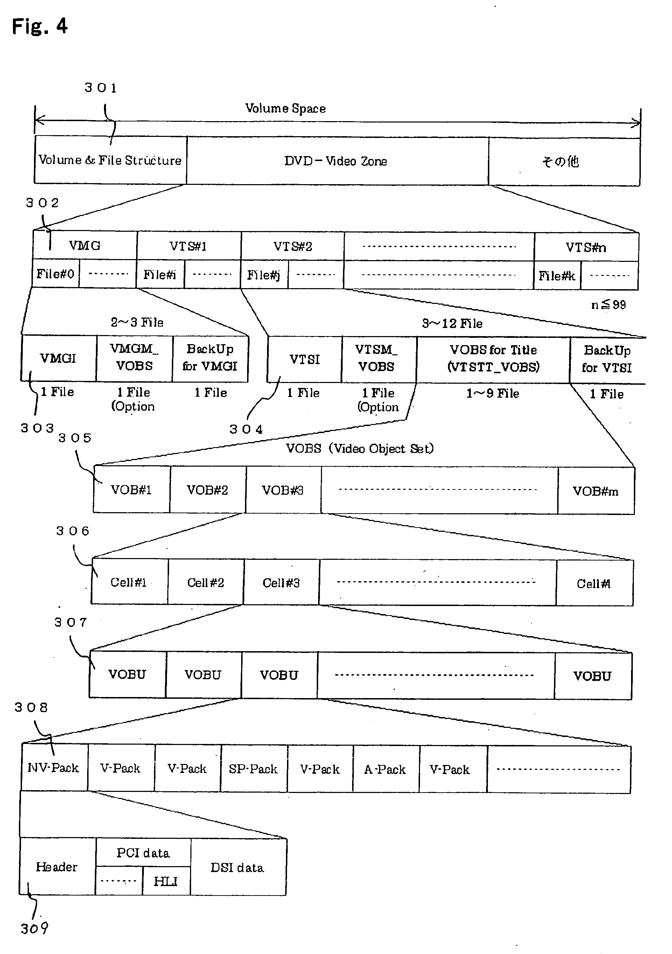

Fig. 4 is a diagram showing exemplary structures of DVD-Video Version 1.X, Version 2.X, and DVD+VR. It should be noted that Fig. 4 is common to Video Version 1.X, Version 2.X, DVD+VR not including user data for fast search, and DVD+VR including user data for fast search. The user data for fast search will be described later.

As shown in Fig. 4, a disc is comprised of file system data (Volume & File Structure) 310, and video (DVD-Video Zone). The Video (DVD-Video Zone) is comprised of manager data (VMG) 302 and a video title set (VTS). Manager data (VMG) 302 is comprised of manager information (VMGI) 303 and the like, while the video title set (VTS) is comprised of video title set information (VTSI) 304, video object set (VOBS for Title), and the like. The Video object set (VOBS for Title) is comprised of video object (VOB) 305 which is in turn comprised of cells (Cell) 306, each of which is comprised of video object units (VOBU) 307, each of which is comprised of NV-Pack 308, V-Pack, and the like. NV-Pack 308 is comprised of header (Header) 309, DSI data, and the like.

Here, VOBU (Video Object Unit) is comprised of one or a plurality of GOPs (Group Of Pictures) defined by MPEG, and generally has one GOP and a duration of 0.5 seconds. Then, since NV-Pack (Navigation Pack which is data for variable speed reproduction) is placed at the head of VOBU, NV-Pack is generally placed every 0.5 seconds.

In this event, the following four types of information must be generated as critical time map information:
<1> start addresses of all VOBUs as VTS_VOBU_SA in VTSI;
<2> an end address of VOBU, an end address of a first core picture, an end address of a second core picture, and an end address of a third core picture as VOBU_EA, VOBU_1STREF_EA, VOBU_2NDREF_EA, VOBU_3RDREF_EA, respectively, in DSI of NV-Pack;
<3> addresses of the +240th, +120th, +60th, +20th, +15th, +14th, +13th, +12th, +11th, +10th, +9th, +8th, +7th, +6th, +5th, +4th, +3rd, +2nd, +1 st VPBls of current VOBUs, and addresses of -1st, -2nd, -3rd, -4th, -5th, -6th, -7th, - 8th, -9th, -10th, -11th, -12th, -13th, -14th, -15th, -20th, -60th, -120th, -240th VOBUs of current VOBUs as FWDI, BWDI in DSI of NV-Pack (here, DVD-Video differs from DVD+VR in that DVD-Video requires exact values for all data FWD_240 - FWDI_1, BWDI_1 - BWDI_240, while DVD+VR requires exact values for FWDI_6 - FWD_1, BWDI_1 - BWDI_240, but need not have exact data in far future by setting the same value as FWDI_6 to FWDI_10 - FWDI_7, and setting 3FFFFFFFH to FWDI_240 - FWDI_11), the next VOBU address having video data, the next VOBU address, the preceding VOBU address, and the preceding VOBU address having video data; and
<4> addresses of an audio pack (A_PCK) and a sub-picture pack (SP_PCK) in synchronization with the NV-Pack, as A_SYNCA, SP_SYNCA, respectively, in DSI of the NV-Pack.

In this way, the time map must be frequently calculated and created.

Next, the DVD-VR format will be described.

Formats available for DVD-VR include a DVD-VR format which does not include user data for fast search, and a DVD-VR format which includes user data for fast search.

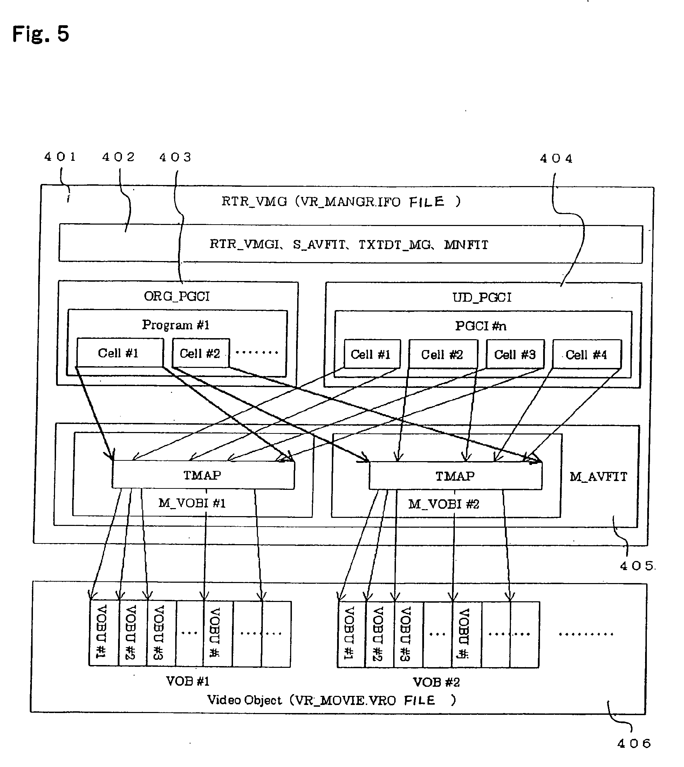

Fig. 5 is a diagram showing an exemplary structure of the DVD-VR. It should be noted that Fig. 5 is common to the DVD-VR which does not include user data for fast search and the DVD-VR which includes user data for fast search. The user data for fast search will be described later.

As shown in Fig. 5, a file is mainly comprised of VR_MANGR.IFO file 401 for manager data, and VR_MOVIE.VRO file 406 for video/audio data.

VR_MANGR.IFO file 401 is comprised of manager information (RTR_VMGI) 402, still image information (S_AVFIT), text information (TXTDT_MG), manufacturer information (MNFIT), original program connection information (ORG_PGCI) 403, user defined program connection information (UD_PGCI) 404, and motion video information (M_AVFIT) 405.

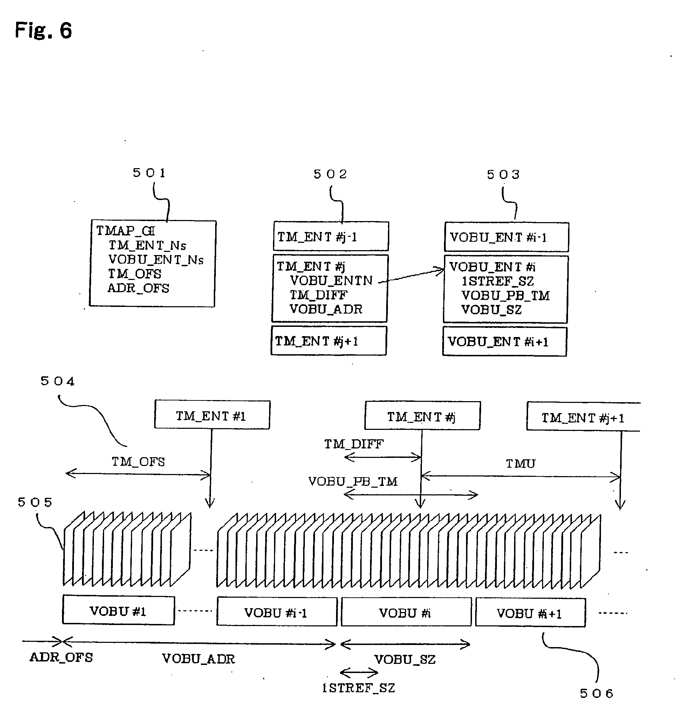

Here, the following ten types of information, shown in Fig. 6, must be generated as critical time map information recorded in motion video information (M_AVFIT).

Fig. 6 is a diagram showing an example of DVD-VR time map information.
<1> TM_ENT_Ns for each VOB (the total number of TMUs each having 600 field and a duration of approximately 10 seconds), as indicated at TMAP_Gl 501;
<2> VOBU_ENT_Ns for each VOB (the total number of VOBUs), as indicated at TMAP_Gl 501;
<3> TM_OFS for each VOB (the number of video fields from the head of VOB to the head of TMU), as indicated at TMAP_Gl 501;
<4> ADR_OFS for each VOB (an address offset from the head of the VR_MOVIE.VRO file to the head of VOBU within VOB), as indicated at TMAP_Gl 501;
<5> a VOBU number at the head of TMU, as VOBU_ENTN for each TMU, as indicated at TM_ENT 502;
<6> a time difference between the head of VOBU and the head of TMU (the number of fields), as TM_DIFF for each TMU, as indicated at TM_ENT 502;
<7> a start address of VOBU at the head of TMU, as VOBU_ADR for each TMU, as indicated at TM_ENT 502;
<8> the number of sectors occupied by the first core picture within VOBU, as 1 STREF_SZ for each VOBU, as indicated at VOBU_ENT 503;
<9> a time per VOBU (the number of fields), as VOBU_PB_TM for each VOBU, as indicated at VOBU_ENT 503;
<10> the number of sectors per VOBU, as VOBU_SZ for each VOBU, as indicated at VOBU_ENT 503.

In regard to these tables, the values must be correctly generated.

Next, the DVD-SR format will be described.

Formats available for DVD-SR include a DVD-SR format which does not include user data for fast search, and a DVD-SR format which includes user data for fast search.

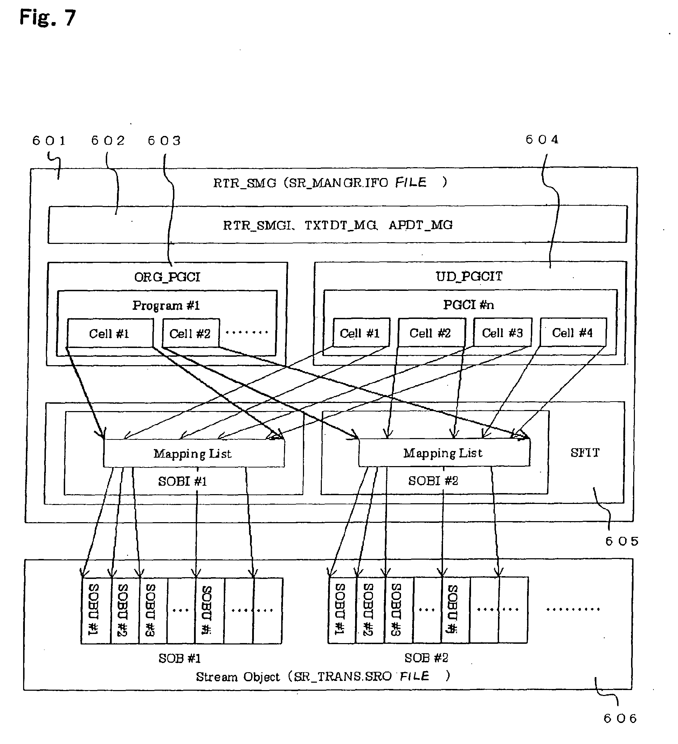

Fig. 7 is a diagram showing an example of the DVD-SR format. It should be noted that Fig. 7 is common to the DVD-SR which does not include user data for fast search, and the DVD-SR which includes user data for fast search. The user data for fast search will be described later.

As shown in Fig. 7, a file is mainly comprised of SR_MANGR.IFO file 601 for manager data, and SR_TRANS.SR0 file 606 for video/audio stream data.

SR_MANGR.IFO file 601 is comprised of manager information (RTR_SMGl) 602, text information (TXTDT_MG), application data (APDT_MG), original program connection information (ORG_PGCl) 603, user defined program connection information (UD_PGCIT) 604, and stream information (SFIT) 605.

Here, the following two types of information must be generated as critical mapping list information recorded in the stream information (SFIT).

### <1> Define SOBU in units of 64 kB, and record IAPAT for each SOBU.

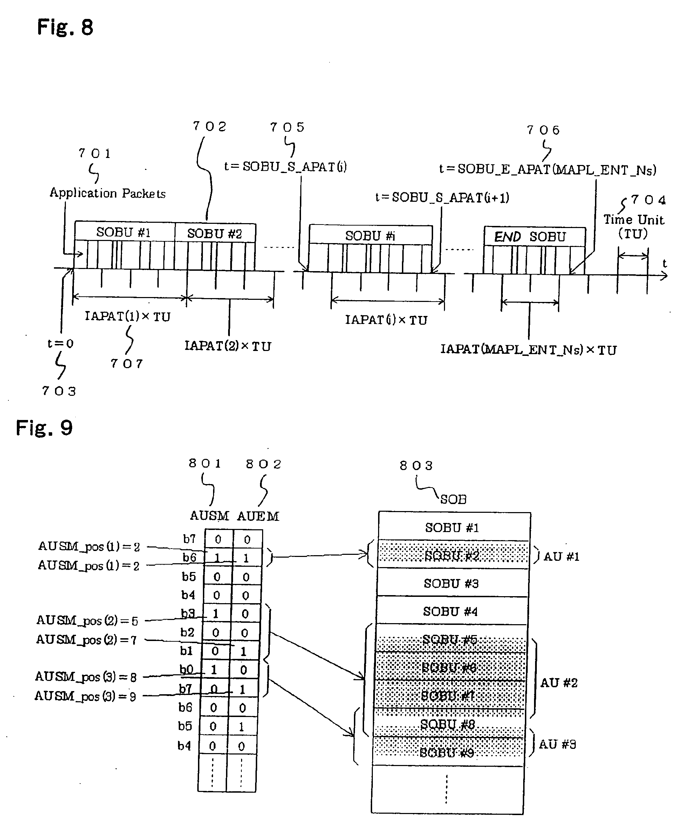

Fig. 8 is a diagram showing SOB0 and IAPAT in the DVD-SR format.

As shown in Fig. 8, SOBU and IAPAT in the DVD-SR format are comprised of application packet (Application Packet) 701, SOBU 702, time t703, time unit (TU) 704, SOBU start application packet time (SOBU_S_APAT) 705, SOBU end application packet time (SOBU_E_APAT) 706, and incremental application packet time IAPAT (Incremental Packet Arrival Time) 707.

SOBU (Stream Object) 702 is defined as a recording unit having a 64-kB. The total number of SOBUs on a disc is represented by MAPL_ENT_Ns. Time unit TU 704 is defined to be 5.69 msec which is 512 cycles when a 90-kHz clock is used. IAPAT 707 indicates the number of time units TU from the first time unit after the head of each SOBU to the first time unit after the end of SOBU. In the DVD-SR format, IAPATs are calculated for all recorded SOBUs (IAPAT(1) - IAPAT(MAPL_ENT_Ns)), and recorded as a tabular data (mapping list).

### <2> Record AUSM of SOBU/8 (bytes), and AUEM.

Fig. 9 is a diagram showing AUSM and AUEM.
· AUSM_pos(i) designates a bit position at which an i-th (1≤i≤AU_Ns) AU (Access Unit; I-picture) starts in AUSM.
· AUEM_pos(i) designates a bit position at which an i-th (1≤i≤AU_Ns) AU (Access Unit; I-picture) ends in AUEM.

Therefore, they show that:
· the i-th (1≤i≤_AU Ns) AU starts at SOBU_AUSM_pos(i); and
· the i-th (1≤i≤AU_Ns) AU ends at SOBU_EUEM_pos(i).

For these tables, the values must be correctly generated.

Next, the DVD-HDVR format will be described.

Formats available for DVD-HDVR include a DVD-HDVR format which does not include user data for fast search, and a DVD-HDVR format which includes user data for fast search.

Since an exemplary structure of DVD-HDVR is basically equivalent to that shown in Fig. 5, its illustration is omitted.

A difference between the structure of DVD-HDVR and the structure shown in Fig. 5 lies in that there are an HR_STRMx.SRO file indicative of Stream Object, and an HR_APDAT.DAT file indicative of other data, in addition to the HR_MOVIE.VRO file 406 indicative of Video Object. However, these files are not limited to these names.

Since critical time map information for DVD-HDVR is equivalent to that shown Fig. 5, its illustration is omitted. The following 11 types of information must be generated as critical time map information:
<1> TM_ENT_Ns (the total number of TMUs (having 600 fields and a duration of approximately 10 seconds) per VOB (SOB), as indicated at TAMP_Gl501;
<2> VOBU_ENT_Ns for each VOB (SOB) (the total number of VOBUs (SOBU_HDs)), as indicated at TMAP_Gl 501;
<3> TM_OFS for each VOB (SOB) (the number of video fields from the head of VOB (SOB) to the head of TMU), as indicated at TMAP_Gl 501;
<4> ADR_OFS for each VOB (SOB) (an address offset from the head of the VR_MOVIE.VRO file to the head of VOBU (SOBU_HD) within VOB (SOB)), as indicated at TMAP_Gl 501;
<5> a VOBU (SOBU_HD) number at the head of TMU, as VOBU_ENTN for each TMU, as indicated at TM_ENT 502;
<6> a time difference between the head of VOBU (SOBU_HD) and the head of TMU (the number of fields), as TM_DIFF for each TMU, as indicated at TM_ENT 502;
<7> a start address of VOBU (SOBU_HD) at the head of TMU, as VOBU_ADR for each TMU, as indicated at TM_ENT 502;
<8> the number of sectors occupied by the first core picture within VOBU (SOBU_HD), as 1STREF_SZ for each VOBU, as indicated at VOBU_ENT 503;
<9> a time per VOBU (SOBU_HD) (the number of fields), as VOBU_PB_TM for each VOBU, as indicated at VOBU_ENT 503;
<10> the number of sectors per VOBU (SOBU_HD), as_VOBU_SZ for each VOBU, as indicated at VOBU_ENT 503; and
<11> PATS for each PACKETGROUP which is defined in units of 32 kB.

In regard to these tables, the values must be correctly generated.

However, <1 >, <3>, <5>, <6>, <7> related to TMU need not be generated.

Next, the video/audio stream will be described. The video/audio. stream may be in conformity to any of a program stream type defined by DVD-Video Version 1.X, Version 2.X, DVD+VR, DVD-VR; a program stream type which contains a transport stream defined by DVD-SR; a program stream type defined by DVD-HDVR; and a program stream type which contains a transport stream.

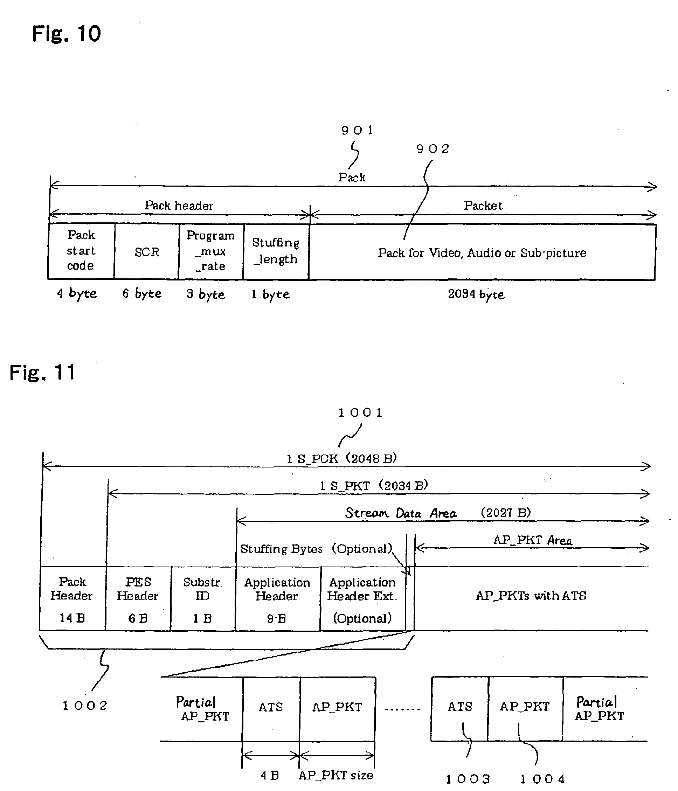

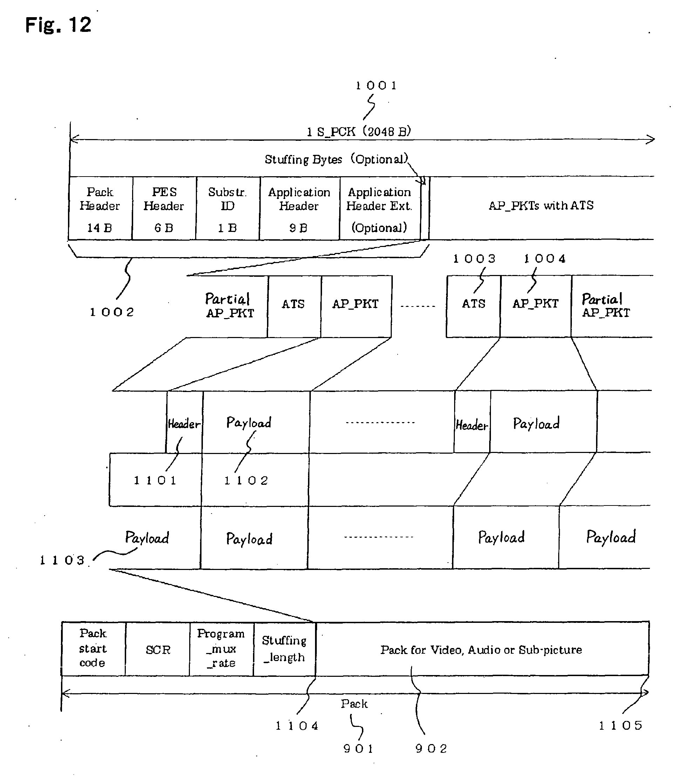

Fig. 10 is a diagram showing a video, audio, sub-picture pack defined by DVD-Video Version 1.X, Version 2.X, DVD+VR, DVD-VR, DVD-HDVR. Fig. 11 in turn is a diagram showing a stream pack defined by DVD-SR. Further, Fig. 12 is a diagram showing, by way of example, how the video pack shown in Fig. 11 is generated from the stream pack shown in Fig. 10.

As shown in Fig. 10, 2048-byte video pack (Pack) 901 is comprised of video, audio, sub-picture (Pack for Video, Audio or Sub-picture) 902, and others.

As shown in Fig. 11, 2048-byte stream pack (S_PCK) 1001 is comprised of stream pack header 1002, application time stamp (ATS) 1003, and application packet (AP_PKT) 1004.

As shown in Fig. 12, header 1101, payloads 1102, 1103, video pack start point 1104, and video pack end point 1105 are defined in the video pack.

In Fig. 12, the video pack defined by DVD-Video Version 1.X, Version 2.X, DVD+VR, DVD-VR, DVD-HDVR is generated from the stream pack defined by DVD-SR in the following manner.
<1> Application packet 1004 is extracted from stream pack 1001. Here, as shown in Fig. 10, application packet 1004 is comprised of header 1101 and payload 1102.
<2> Only payload 1102 is extracted from application packet 1004.
<3> Video pack 901 is generated using extracted payload data 1103 as video/audio data 902 within video pack 901.
<4> It should be noted that the head of GOP is detected from payload data 1103, stuffing is inserted from video pack head 1104, which is the head of VOBU, to a GOP end point which defines the end of VOBU, thereby matching with video pack end point 1105. In other words, GOP is aligned to pack 901.

When a stream pack defined by DVD-SR is generated from a video pack defined by DVD-Video Version 1.X, Version 2.X, DVD+VR, DVD-VR, DVD-HDVR, the processing performed herein is reverse to the foregoing.

The same applies to a method of generating a video pack defined by DVD-Video Version 1.X, Version 2.X, DVD+VR, DVD-VR, DVD-HDVR from a stream pack defined by DVD-HDVR.

Next, the DVD multi-logical format will be described.

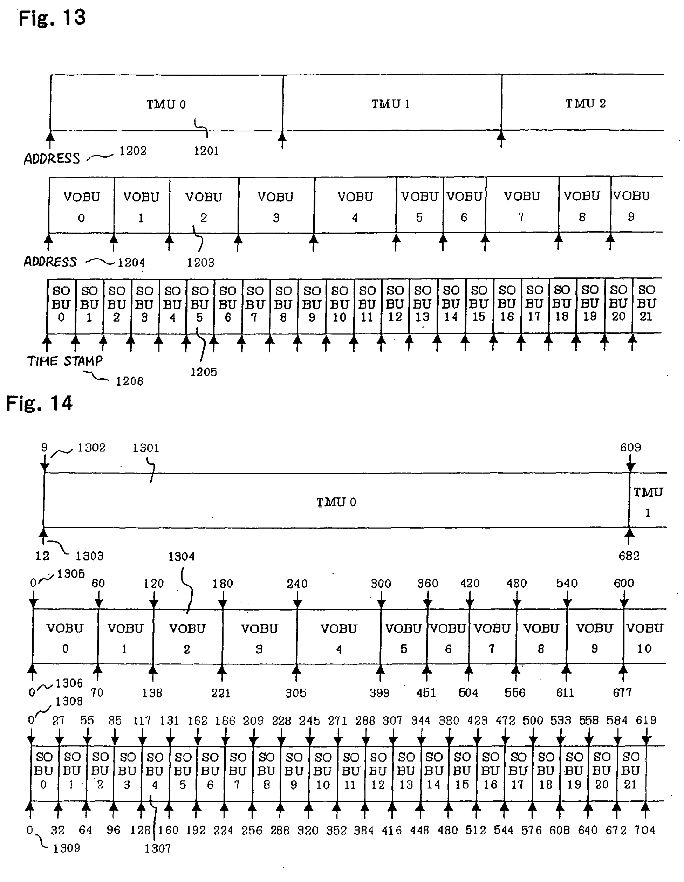

Fig. 13 is a diagram showing an example of the DVD multi-logical format.

As shown in Fig. 14, the DVD multi-logical format records all time maps associated with DVD-Video Version 1.X, Version 2.X, DVD+VR, DVD-VR, DVD-SR, DVD-HDVR formats.

The DVD multi-logical format basically has such contents as address 1202 related to TMU (time map unit) 1201 in units of 10 seconds; address 1204 related to VOBU, SOBU_HD based on GOP 1203; and time stamp 1206 related to every 64 kB of SOBU or every 32 kB of PacketGroup 1205.

In the following, VOBU in the DVD-Video Version 1.X, Version 2.X, DVD+VR, DVD-VR, DVD-HDVR format has the same meaning as SOBU_HD in the DVD-HDVR format, so that they are represented by VOBU. Likewise, since SOBU in the DVD-SR format has the same meaning as PacketGroup in the DVD-HDVR format, though they are different in size, they are represented by SOBU.

Now, the DVD multi-logical format as mentioned above will be described in greater detail with reference to Figs. 14 to 16.

Fig. 14 is a diagram for describing the DVD multi-logical format in greater detail.

In TMU 1301, TMU0, TMU1 indicates ten seconds, respectively. Also, in this example, time stamp 1302 at the head of TMU0 is indicated by video field number "9," and sector address 1303 at the head of TMU0 is indicated by "12." Likewise, a time stamp (field number) at the head of TMU1 is indicated by "609," and a sector address at the head of TNU1 by "682." The time stamp (field number) necessarily increases in increments of 600. The time stamp increases subsequently in a similar manner.

While VOBU 1304 generally has one GOB (0.5 seconds), it is assumed herein that VOBU 1304 has two GOPs (one second) in order to definitely establish the relationship with TMU. When VOBU 1304 lasts for one second or less, this complies with the rules of DVD. Also, time stamp 1305 at the head of VOBU0 is indicated by video field number "0," and sector address 1306 at the head of VOBU0 is indicated as "0." Likewise, a time stamp at the head of VOBU1 is indicated by field number "60," and a sector address at the head of VOBU1 is indicated as "70." Subsequent time stamps and sector addresses at the head of VOBUs are indicated in a similar incremental manner.

SOBU 1307 is defined to have 64 kB. Time stamp 1308 at the head of SOBUO is indicated by video field number "0," and sector address 1309 at the head of SOBUO is indicated as "0." Likewise, a time stamp at the head of SOBU1 is indicated by video number "27," and a sector address at the head of SOBU1 is indicated as "32." The sector address increases in increments of 32. Subsequent time stamps and sector addresses at the head of SOBUs are indicated in a similar incremental manner.

The DVD multi-logical format records these TMU head start time 1302, VOBU start time 1305, SOBU start time 1308, TMU address 1303, VOBU address 1306, SOBU address 1309, VOB start time, and VOB address.

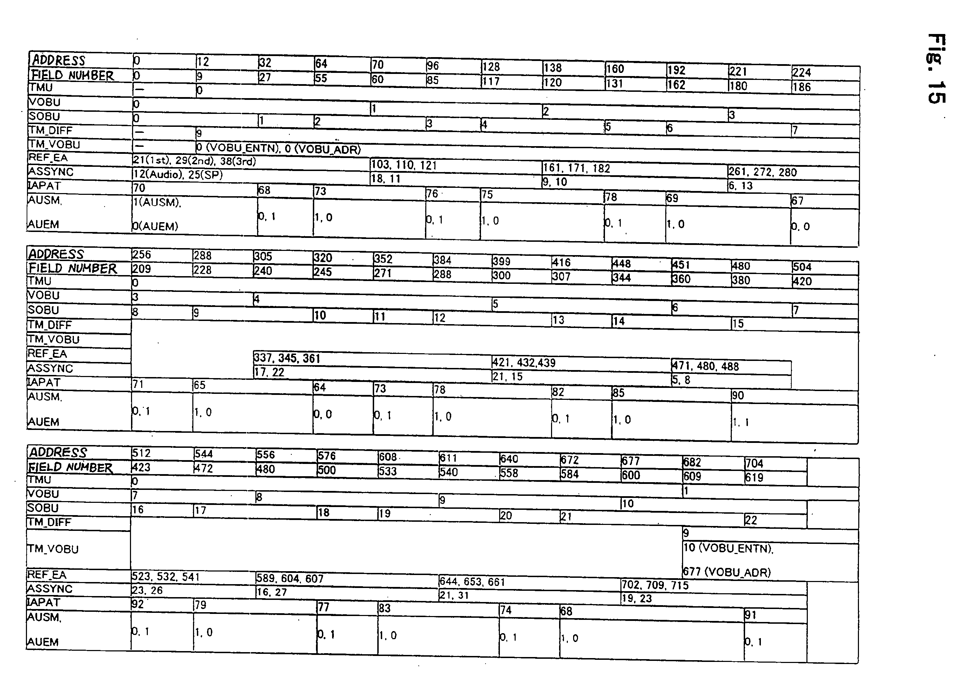

Fig. 15 is a diagram showing data which must be recorded to make up the DVD multi-logical format. It should be noted that the address and time stamp (field number) for each of TMUs, VOBUs, SOBUs in Fig. 15 are shown to have the same values as those shown in Fig. 14.

Here, the following data are generated and recorded in relation to VOB, TMU, VOBU, SOBU.
(1) In relation to VOB:
   · the total number of TMUs (TM_ENT_Ns) in VOB;
   · the total number of VOBUs (VOBU_ENT_Ns) in VOB;
   · the number of video fields (TM_OFS) from the head of VOB to the head of TMU in VOB; and
   · an address offset (ADR_OFS) from the head of a VR MOVIE.VRO file to the head of VOBU within VOB.

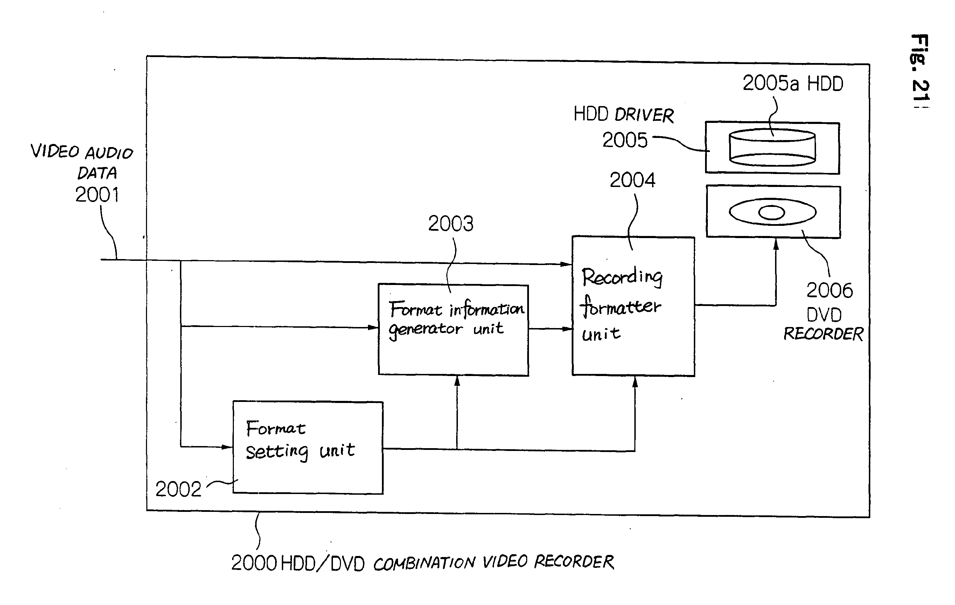

   The foregoing elements are not shown in Fig. 15.
(2) In relation to TMU:
   · a time difference (the number of fields) (TM DIFF) between the head of VOBU and the head of TMU: TMU0, TMU1 are both "9" as shown in TM_DIFF in Fig. 14;
   · a VOBU number (VOBU_ENTN) at the head of TMU: as shown in TM_VOBU in Fig. 14, VOBU0 is "0" in TMU0, and VOBU10 is "10" in TMU1.
   · a start address (VOBU_ADR) of VOBU at the head of TMU: as shown in TM_VOBU in Fig. 14, the address of VOBU0 is "0" in TMU0, and the address of VOBU10 is "677" in TMU1.
(3) In relation to VOBU:
   · the number of sectors (1 STREF_SZ) occupied by a first core picture within VOBU: from 1st of REF EA (a reference end address of the first core picture), and the VOBU start address in Fig. 14, 21-0=21 is applied to VOBU0, while 103-70=33 to VOBU1. Similar calculations are performed for subsequent VOBUs;
   · a time per VOBU (the number of fields) (VOBU_PB_TM): from the field number at the head of VOBU, and the field number at the head of next VOBU in Fig. 14, 60-0=60 is applied to VOBU0, while 120-60-60 to VOBU1. Similar calculations are performed for subsequent VOBUs;
   · the number of sectors (VOBU_SZ) per VOBU: from the start address of VOBU, and the start address of the next VOBU, 70-0=70 is applied to VOBU0, while 138-70=68 to VOBU1. Similar calculations are performed for subsequent VOBUs;
   · a start address of VOBU (VTS_VOBU_SA): From the start address of VOBU in Fig. 14, "0" is set for VOBU0, while "70" is set for VOBU1. For subsequent VOBUS, refer to addresses in a similar manner;
   . an end address of VOBU, an end address of a first core picture, an end address of a second core picture, and an end address of a third core picture (VOBU_EA, VOBU_1STREF_EA, VOBU_2NDREF_EA, VOBU_3RDREF_EA): though VOBU_EA is not shown for simplicity, "69" is set for VOBU0, and "137" is set for VOBU1. The addresses are set in a similar manner for subsequent VOBUs. VOBU_1STREF_EA, VOBU_2NDREF_EA, VOBU_3RDREF_EA are positioned at "21," "29," 38," respectively, in VOBU0, and at "103," "110," "121," respectively, in VOBU1 as shown in 1st, 2nd, 3rd of REF_EA in Fig. 15. The same applies to the subsequent VOBUs and associated core pictures;
   · addresses of the +240th, +120th, +60th, +20th, +15th, +14th, +13th, +12th, +11 th, +10th, +9th, +8th, +7th, +6th, +5th, +4th, +3rd, +2nd, +1 st VOBUs of the current VOBUs, and addresses of -1 st, -2nd, -3rd, -4th, -5th, -6th, - 7th, -8th, -9th, -10th, -11th, -12th, -13th, -14th, -15th, -20th, -60th, -120th, - 240th VOBUs of current VOBUs, address of next VOBU which has video data, address of next VOBU, address of preceding VOBU, and address of the preceding VOBU which has video data;
      (FWDI, BWDI): calculate from the start address of VOBU in Fig. 15. Description in Fig. 15 is omitted;
   · addresses of an audio pack (A_PCK), a sub-picture pack (SP_PCK) in synchronization with associated NV-Pack (A_SYNCA, SP_SYNCA): as shown in ASYNC in Fig. 15, "12" and "25" are set for VOBU0; "18" and "11" are set for VOBU1. The same applies to the subsequent VOBUs.
(4) In relation to SOBU:
   · the number of time units TU (each 5.69 msec) (IAPAT) from the first time unit after the head of each SOBU to the first time unit after the end of SOBU: as shown in IAPAT in Fig. 15, SOBU0 has "70" time units, while SOBU1 has "68" time units. The same applies to the subsequent SOBUs;
   · a bit position at which i-th AU starts (AUSM_pos(i)), and a bit position at which the i-th AU ends (AUEM_pos(i)): as shown in AUSM, AUEM in Fig. 14, "10101010" for AUSM, and "01010100" for AUEM, one bit per SOBU. The same applies to the subsequent SOBUs;
   · PATS when SOBU is used as PacketGroup: from the field numbers in Fig. 15, values indicating a zero-th fold in PacketGroup0, and a 27-th fold in Packegroup1, respectively, as represented in time stamps. The same applies to the subsequent PacketGroups.

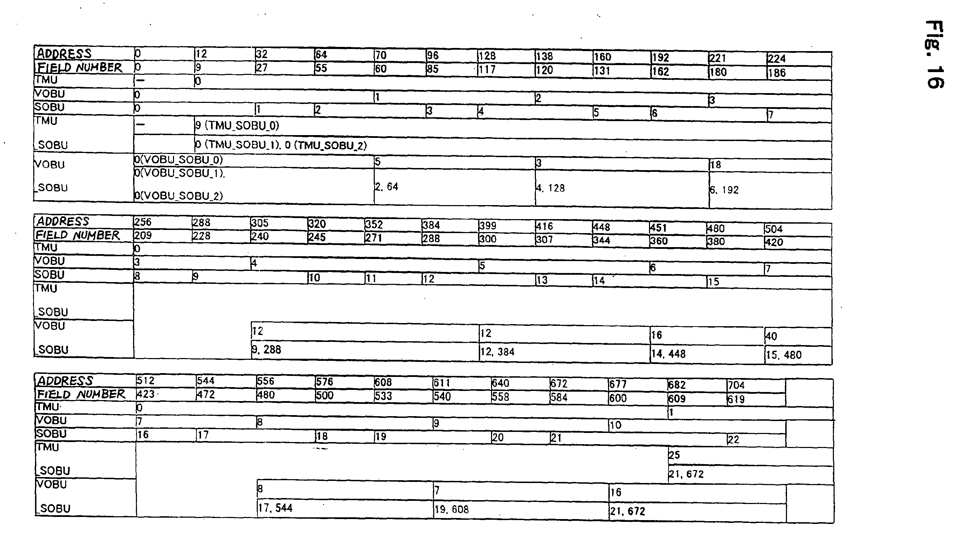

   Fig. 16 is a diagram showing data which can be recorded as part of the DVD multi-logical format, in addition to the data shown in Fig. 15. In addition to the data shown in Fig. 15, Fig. 16 shows data which enables a fast time search, variable speed reproduction with high speed and high image quality, and acquisition and display of temporal information during a seek. It should be noted that the address and time stamp (field number) for each of TMUs, VOBUs, SOBUs in Fig. 16 show the same values as those shown in Fig. 14.
   Here, the following data are generated and recorded in relation to TMU, VOBU, SOBU.
(5) In relation to TMU:
   · a time difference (the number of fields) (TMU_SOBU_0) between the head of SOBU and the head of TMU: as shown in Fig. 16, 9-0=9 is applied to TMU0, while 609-584=25 is applied to TMU1. The same calculation is performed for subsequent TMUs.
   · a SOBU number (TMU_SOBU_1) at the head of TMU: as shown in Fig. 16, "0" is set for SOBUO in TMU0, while "21" for SOBU21 in TMU1. The SOBU number is set for subsequent SOBUS in a similar manner. same applies in the following; and
   · a start address of SOBU at the head of TMU (TMU_SOBU_2):
      as shown in Fig. 16, the address of SOBU0 is at "0" in TMU0, while the address of SOBU21 is at "672" in TMU1. The addresses are set in a similar manner for the subsequent TMUs.
(6) In relation to VOBU:
   · a time difference (the number of fields) between the head of SOBU and the head of VOBU (VOBU_SOBU_0): as shown in Fig. 16, there is no time difference for VOBU0, while there are a time difference of 60-55=5 for VOBU1. The same applies to the subsequent VOBUs;
   · a SOBU number at the head of SOBU (VOBU_SOBU_1): as shown in Fig. 16, "0" is set for SOBU0 in VOBU0, while "2" is set for SOBU2 in VOBU1. The SOBU numbers are set for the subsequent VOBUs in a similar manner.
(7) In relation to SOBU:
   · a field number per SOBU (SOBU_TM): from field numbers shown in Fig. 16, 27-0=27 is applied for SOBU0, while 55-27=28 is applied for SOBU1. Similar calculations are performed for the subsequent SOBUs.

Stated another way, all or part of data shown in (1 ) - (7) is recorded on hard disk 106a by HDD driver 106 or on a DVD by DVD recorder 112 under the control of control block 105.

Once the data listed in (1 ) - (4) have been recorded on hard disk 106a, the data can be readily converted into any of such formats as DVD-Video Version 1.X, Version 2.X, DVD+VR, DVD-VR, DVD-SR, DVD-HDVR when the video/audio data recorded on hard disk 106a is dubbed to a DVD. On the other hand, once the data listed in (1 ) - (4) have been recorded on a DVD, the video/audio data recorded on the DVD can be readily converted to any of such formats as DVD-Video Version 1.X, Version 2.X, DVD+VR, DVD=VR, DVD-SR, DVD-HDVR, and can be readily recorded on a disc which is supported by an intended format. Since the DVD multi-logical format has the requisite time map table, the DVD multi-logical format can readily accomplish a fast time search, high-speed, high-image quality variable speed reproduction, immediate temporal information acquisition and display during or after a seek, and the like.

It should be noted that depending on the compatibility of a particular video format, HDTV video may have to be converted into SDTV video to match the resolution, for example, when DVD-HDVR is converted into DVD-VR.

Next, description will be made on the fast time search accomplished by TMU during the recording of the foregoing data (1 ) - (4).
· A target TMU number is calculated by dividing a target time by ten seconds, and a remaining time within TMU is found from the remainder of the result of the division.
· TM_DIFF is added to the remaining time within TMU, and resulting sum is regarded as a remaining time within TMU.
· A VOBU number and a VOBU address are found for the head of target TMU from VOBU#ENTN, VOBU ADR.
· For each VOBU, a time (the number of fields) per VOBU is calculated, and subtracted from the remaining time within TMU. Also, the number of sectors per VOBU is calculated from VOBU_SZ to jump to the head of next VOBU.
· Target VOBU is defined to be VOBU at which the remaining time expires within TMU, and reproduction is started from the target VOBU.

In this way, a rough time search is made in units of TMUs, and subsequently, a fine time search can be made by following VOBUs within TMU, resulting in the ability to readily implement the fast time search even if the time is variable from one VOBU to another.

Likewise, the fast search can be implemented by recording FWDI and BWDI of DVD-Video Version 1.X, Version 2.X in DVD+VR, DVD-VR, DVD-SR, DVD-HDVR.

Also, the fast time search can be readily provided for video/audio data recorded on a disc in DVD-SR format by recording the data listed in (5), (7).

The following description will be made on the TMU-based fast time search when the data in (5) and (7) are recorded.
· A target TMU number is calculated by dividing a target time by ten seconds, and a remaining time within TMU is found from the remainder of the result of the division.
· TMU_SOBU_0 is added to the remaining time within TMU, and resulting sum is regarded as a remaining time within TMU.
· A SOBU number and a SOBU address are found at the head of the target TMU from TMU_SOBU_1, TMU_SOBU_2.
· For each SOBU, a time (the number of fields) per SOBU is calculated from SOBU_TM, and subtracted from the remaining time within TMU. Then, 32 is added to the SOBU address to jump to the head of the next SOBU.
· Target VOBU is defined to be VOBU at which the remaining time expires within TMU, and reproduction is started from the target VOBU.

In this way, a rough time search is made in units of TMUs, and subsequently, a fine time search can be made by following SOBUs within TMU, resulting in the ability to readily implement the fast time search even if the time is variable from one SOBU to another.

Likewise, the fast time search can be readily provided for video/audio data recorded on a disc in DVD-SR format by recording the data listed in (6), (7).

The following description will be made on the TMU-based fast time search when the data in (6) and (7) are recorded.
· A target VOBU number is calculated by dividing a target time by 0.5 seconds, and a remaining time within VOBU is found from the remainder of the result of the division.
· VOBU_SOBU_0 is added to the remaining time within VOBU to derive the remaining time within VOBU.
· A SOBU number and a SOBU address are found at the head of the target TMU from VOBU_SOBU_1, VOBU_SOBU_2.
· For each SOBU, a time (the number of fields) per SOBU is calculated from SOBU_TM, and subtracted from the remaining time within VOBU. Then, 32 is added to the SOBU address to jump to the head of the next SOBU.
· Target VOBU is defined to be VOBU at which the remaining time expires within TMU, and reproduction is started from the target VOBU.

In this way, a rough time search is made in units of VOBUs, and subsequently, a fine time search can be made by following SOBUs within VOBU, resulting in the ability to readily implement the fast time search even if the time is variable from one SOBU to another.

Next, description will be made on the DVD+VR format including user data for fast search, the DVD-VR format including user data for fast search, the DVD-SR format including user data for fast search, and the DVD-HDVR format including user data for fast search.

The following data are recorded in the DVD+VR format.

### [In relation to VOBU]

· a start address of VOBU (VTS_VOBU_SA);
· an end address of VOBU, an end address of a first core picture, an end address of a third core picture, and an end address of a third core picture (VOBU_EA, VOBU_1STREF_EA, VOBU_2NDREF_EA, VOBU_3RDREF_EA).
· addresses of the +240th, +120th, +60th, +20th, +15th, +14th, +13th, +12th, +11th, +10th, +9th, +8th, +7th, +6th, +5th, +4th, +3rd, +2nd, +1st VOBUs of the current VOBUs, and addresses of -1 st, -2nd, -3rd, -4th, -5th, -6th, - 7th, -8th, -9th, -10th, -11th, -12th, -13th, -14th, -15th, -20th, -60th, -120th, - 240th VOBUs of current VOBUs, address of next VOBU which has video data, address of next VOBU, address of preceding VOBU, and address of the preceding VOBU which has video data (FWDI, BWDI); and
· addresses of an audio pack (A_PCK), a sub-picture pack (SP_PCK) in synchronization with associated NV-Pack (A_SYNCA, SP_SYNCA).

Then, all or part of the following data is recorded within the DVD+VR format or in user data out of the DVD+VR format.

### [In relation to VOB]

· the total number of TMUs (TM_ENT_Ns) in VOB;
· the total number of VOBUs (VOBU_ENT_Ns) in VOB;
· the number of video fields (TM_OFS) from the head of VOB to the head of TMU in VOB; and
· an address offset (ADR_OFS) from the head of a VR_MOVIE.VRO file in VOB to the head of VOBU in VOB.

### [In relation to TMU]

· a time difference (the number of fields) between the head of VOBU and the head of TMU (TM_DIFF);
· a VOBU number (VOBU_ENTN) at the head of TMU; and
· a start address of VOBU (VOBU_ADR) at the head of TMU.

### [In relation to VOBU]

· The number of sectors occupied by the first core picture within VOBU (1STREF_SZ);
· a time per VOBU (the number of fields) (VOBU_PB_TM); and
· the number of sectors per VOBU (VOBU_SZ).

### [In relation to SOBU]

· The number of time units TUs (each 5.69 msec) (IAPAT) from the first time unit after the head of each SOBU to the first time unit after the end of the SOBU; and
· a bit position at which i-th AU starts (AUSM_pos(i)), and a bit position at which i-th AU ends (AUEM_pos(i)).
· a PacketGroup time stamp.

### [In relation to TMU (added)]

· A time difference (the number of fields) between the head of SOBU and the head of TMU (TMU_SOBU_0);
· a SOBU number (TMU_SOBU_1) at the head of TMU; and
· a start address (TMU_SOBU_2) of SOBU at the head of TMU.

### [In relation to VOBU (added)]

· A time difference (the number of fields) between the head of

### SOBU and the head of VOBU (VOBU_SOBU_0);

· a SOBU number (VOBU_SOBU_1) at the head of VOBU; and
· a start address (VOBU_SOBU_2) of SOBU at the head of VOBU.

### [)n relation to SOBU (added)]

· A field number (SOBU_TM) per SOBU.

In addition, the following data are recorded in the DVD-VR format.

### [In relation to VOB]

· the total number of TMUs (TM_ENT_Ns) in VOB;
· the total number of VOBUs (VOBU_ENT_N2) in VOB;
· the number of video fields (TM_OFS) from the head of VOB to the head of TMU in VOB; and
· an address offset from the head of a VR_MOV)E.VRO file in VOB to the head of VOBU in VOB (ADR_OFS).

### [In relation to TMU]

· a time difference (the number of fields) between the head of VOBU and the head of TMU (TM_DIFF);
· a VOBU number at the head of TMU (VOBU_ENTN); and
· the start address (VOBU_ADR) of VOBU at the head of TMU.

### [In relation to VOBU]

· the number of sectors (1 STREF_SZ) occupied by a first core picture within VOBU;
· a time (the number of fields) per VOBU (VOBU_PB_TM); and
· the number of sectors (VOBU_SZ) per VOBU.

Then, the following data are recorded within the DVD-VR format or in the user data out of the DVD-VR format.

### [In relation to VOBU]

· the start address (VTS_VOBU_SA) of VOBU; and
· the end address of VOBU, the end address of a first core picture, the end address of a second core picture, and the end address of a third core picture (VOBU_EA, VOBU_1STREF_EA, VOBU_2NDFEF_EA, VOBU_3RDREF_EA).
· addresses of the +240th, +120th, +60th, +20th, +15th, +14th, +13th, +12th, +11th, +10th, +9th, +8th, +7th, +6th, +5th, +4th, +3rd, +2nd, +1 st VOBUs of the current VOBUs, and addresses of -1 st, -2nd, -3rd, -4th, -5th, -6th, - 7th, -8th, -9th, -10th, -11th, -12th, -13th, -14th, -15th, -20th, -60th, -120th, - 240th VOBUs of current VOBUs, address of next VOBU which has video data, address of next VOBU, address of preceding VOBU, and address of the preceding VOBU which has video data (FWDI, BWDI); and
· addresses of an audio pack (A_PCK), a sub-picture pack (SP_PCK) in synchronization with associated NV-Pack (A_SYNCA, SP_SYNCA).

### [In relation to SOBU]

· the number of time units TUs (each 5.69 msec) (IAPAT) from the first time unit after the head of each SOBU to the first time unit after the end of the SOBU;
· a bit position at which i-th AU starts (AUSM_pos(i)), and a bit position at which i-th AU ends (AUEM_pos(i)); and
· a PacketGroup time stamp.

### [In relation to TMU (added)]

· a time difference (the number of fields) between the head of SOBU and the head of TMU (TMU_SOBU_0);
· a SOBU number (TMU_SOBU_1) at the head of TMU; and
· the start address (TMU_SOBU_2) of SOBU at the head of TMU.

### [In relation to VOBU (added)]

· A time difference (the number of fields) between the head of SOBU and the head of VOBU (VOBU_SOBU_0);
· a SOBU number (VOBU_SOBU_1) at the head of VOBU; and
· the start address (VOBU_SOBU_2) of SOBU at the head of VOBU.

### [In relation to SOBU (added)]

· a field number (SOBU_TM) per SOBU.

The following data is recorded in the DVD-SR format.

### [In relation to SOBU]

· the number of time units TUs (each 5.69 msec) (IAPAT) from the first time unit after the head of each SOBU to the first time unit after the end of the SOBU; and
· a bit position at which i-th AU starts (AUSM_pos(i)), and a bit position at which i-th AU ends (AUEM_pos(i)).

As such, the following data are recorded within the DVD-SR format or in the user data out of the DVD-SR format.

### [In relation to VOB]

· the total number of TMUs (TM_ENT_Ns) in VOB;
· the total number of VOBUs (VOBU_ENT_ N2) in VOB;
· the number of video fields (TM_OFS) from the head of VOB to the head of TMU in VOB; and
· an address offset from the head of a VR_MOVIE.VRO file in VOB to the head of VOBU in VOB (ADR_OFS).

### [In relation to TMU]

· A time difference (the number of fields) between the head of VOBU and the head of TMU (TM_DIFF);
· a VOBU number at the head of TMU (VOBU_ENTN); and
· a start address (VOBU_ADR) of VOBU at the head of TMU.

### [In relation to VOBU]

· the number of sectors (1 STREF_SZ) occupied by a first core picture within VOBU;
· a time (the number of fields) per VOBU (VOBU_PB_TM);
· a start address (VTS_VOBU_SA) of VOBU; and
· an end address of VOBU, an end address of a first core picture, an end address of a second core picture, and an end address of a third core picture (VOBU_EA, VOBU_1STREF_EA, VOBU_2NDFEF_EA, VOBU_3RDREF_EA);
· addresses of the +240th, +120th, +60th, +20th, +15th, +14th, +13th, +12th, +11 th, +10th, +9th, +8th, +7th, +6th, +5th, +4th, +3rd, +2nd, +1 st VOBUs of the current VOBU, and the addresses of -1 st, -2nd, -3rd, -4th, -5th, - 6th, -7th, -8th, -9th, -10th, -11 th, -12th, -13th, -14th, -15th, -20th, -60th, -120th, - 240th VOBUs of current VOBU, address of next VOBU which has video data, address of next VOBU, address of preceding VOBU, and address of the preceding VOBU which has video data (FWDI, BWDI); and
· addresses of an audio pack (A_PCK), a sub-picture pack (SP_PCK) in synchronization with associated NV-Pack (A_SYNCA, SP_SYNCA).

### [In relation to SOBU]

· the number of time units TUs (each 5.69 msec) (IAPAT) from the first time unit after the head of each SOBU to the first time unit after the end of the SOBU; and
· a bit position at which i-th AU starts (AUSM_pos(i)), and a bit position at which i-th AU ends (AUEM_pos(i)).

### [In relation to TMU (added)]

· a time difference (the number of fields) between the head of SOBU and the head of TMU (TMU_SOBU_0);
· a SOBU number (TMU_SOBU_1) at the head of TMU; and
· a start address (TMU_SOBU_2) of SOBU at the head of TMU.

### [In relation to VOBU (added)]

· a time difference (the number of fields) between the head of SOBU and the head of VOBU (VOBU_SOBU_0);
· a SOBU number (VOBU_SOBU_1) at the head of VOBU; and
· a start address (VOBU_SOBU_2) of SOBU at the head of VOBU.

### [In relation to SOBU (added)]

· a field number (SOBU_TM) per SOBU.

The following data are recorded in the DVD-HDVR format (note that TMU related data followed by "*" may not be recorded in the DVD-HDVR format).

### [In relation to VOB]

· the total number of TMUs (TM_ENT_Ns) in VOB *;
· the total number of VOBUs (VOBU_ENT_N2) in VOB;
· the number of video fields (TM_OFS) from the head of VOB to the head of TMU in VOB *; and
· an address offset from the head of a VR_MOVIE.VRO file in VOB to the head of VOBU in VOB (ADR_OFS).

### [In relation to TMU]

· A time difference (the number of fields) between the head of VOBU and the head of TMU (TM_DIFF)*;
· a VOBU number at the head of TMU (VOBU_ENTN) *; and
· a start address (VOBU_ADR) of VOBU at the head of TMU *.

### [In relation to VOBU]

· the number of sectors (1 STREF_SZ) occupied by a first core picture within VOBU;
· a time (the number of fields) per VOBU (VOBU_PB_TM);
· the number of sectors per VOBU (VOBU_SZ).

### [In relation to SOBU]

· a PacketGroup time stamp.

Then, the following data are recorded within the DVD-HDVR format or in the user data out of the DVD-HDVR format.

### [In relation to VOBU]

· a start address (VTS_VOBU_SA) of VOBU; and
· an end address of VOBU, end address of a first core picture, end address of a second core picture, and end address of a third core picture (VOBU_EA, VOBU_1STREF_EA, VOBU_2NDFEF_EA, VOBU_3RDREF_EA); · addresses of the +240th, +120th, +60th, +20th, +15th, +14th, +13th, +12th, +11 th, +10th, +9th, +8th, +7th, +6th, +5th, +4th, +3rd, +2nd, +1 st VOBUs of the current VOBUs, and addresses of -1 st, -2nd, -3rd, -4th, -5th, -6th, - 7th, -8th, -9th, -10th, -11 th, -12th, -13th, -14th, -15th, -20th, -60th, -120th, - 240th VOBUs of current VOBUs, address of the next VOBU which has video data, address of next VOBU, address of preceding VOBU, and address of the preceding VOBU which has video data (FWDI, BWDI); and
· addresses of an audio pack (A_PCK) and a sub-picture pack (SP_PCK) in synchronization with associated NV-Pack (A_SYNCA, SP_SYNCA).

### [In relation to SOBU]

· a PacketGroup time stamp.

### [In relation to TMU (added)]

· a time difference (the number of fields) between the head of SOBU and the head of TMU (TMU_SOBU_0);
· a SOBU number (TMU_SOBU_1) at the head of TMU; and
· a start address (TMU_SOBU_2) of SOBU at the head of TMU.

### [In relation to VOBU (added)]

· a time difference (the number of fields) between the head of SOBU and the head of VOBU (VOBU_SOBU_0);
· a SOBU number (VOBU_SOBU_1) at the head of VOBU; and
· a start address (VOBU_SOBU_2) of SOBU at the head of VOBU.

### [In relation to SOBU (added)]

· a field number (SOBU_TM) per SOBU.

With these data, the DVD+VR format including the user data for fast search facilitates conversion into DVD-VR, DVD-SR, DVD-HDVR while complying with DVD+VR format. The DVD+VR format including the user data for fast search also enables a TMU-based fast time search, and enables temporal information to be immediately acquired and displayed during or after a seek, because of the clarification of the times spent per SOBU and PacketGroup.

Also, the DVD-VR format including the user data for fast search facilitates conversion into DVD-Video, DVD+VR, DVD-SR, DVD-HDVR while complying with the DVD-VR format. In addition, the DVD-VR format including the user data for fast search also enables high-speed, high-image quality variable reproduction, including audio sub-picture using Navigation-Pack, and enables temporal information to be immediately acquired and displayed during or after a seek, because of the clarification of the times spent per SOBU and PacketGroup.

The DVD-SR format including the user data for fast search, in turn, facilitates conversion into DVD-Video, DVD+VR, DVD-VR, DVD-HDVR, while complying with the DVD-SR format. The DVD-SR format including the user data for fast search also enables a TMU-based fast time search, and high-speed, high-image quality variable speed reproduction, including audio sub-picture using Navigation-Pack, and enables temporal information to be immediately acquired and displayed during or after a seek, because of the clarification of the times spent per SOBU and PacketGroup.

The DVD-HDVR format including the user data for fast search, in turn, facilitates conversion into DVD-Video, DVD+VR, DVD-SR, while complying with the DVD-HDVR format. The DVD-HDVR format including the user data for fast search also enables high-speed, high-image quality variable speed reproduction, including audio sub-picture using Navigation-Pack, and enables temporal information to be immediately acquired and displayed during or after a seek, because of the clarification of the times spent per SOBU and PacketGroup.

In the present invention as described above, the video recording apparatus for recording a video stream on a recording medium has a plurality of format information generating means each for generating information related to time or recording position defined by a different format from one another; formatting means for adding the information related to time or recording position generated by each of the plurality of format information generating means to the video stream to format the video stream; and recording means for recording the information related to time or recording position added to the video stream by the formatting means on a recording medium together with the video stream, so that the video stream recorded on the recording medium is given the information related to time or recording position defined by different formats from one another for the video stream, thereby facilitating conversion of one format into another when the video stream recorded on the recording medium is dubbed on another type of recording medium.

### (Second Embodiment)

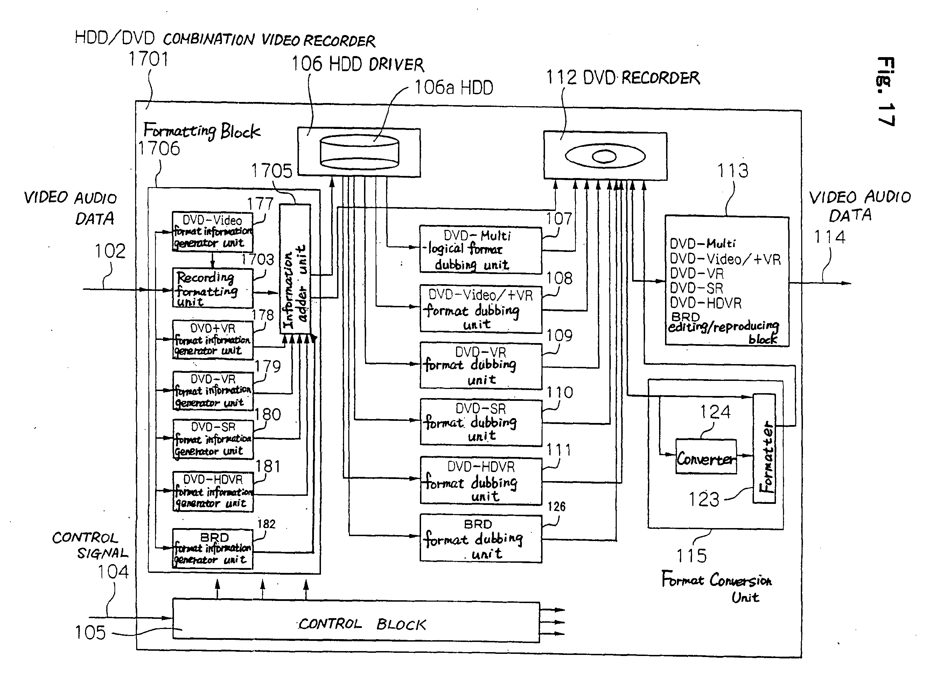

Fig. 17 is a block diagram illustrating a second embodiment of the video recording/reproducing apparatus according to the present invention (HDD/DVD combination video recorder 1701).

As illustrated in Fig. 17, the second embodiment differs from HDD/DVD combination video recorder 101 illustrated in Fig. 1 only in that formatting block 1706 is provided in place of DVD multi-logical conversion block 103.

Formatting block 1706 formats video/audio data 102, which is an incoming video stream, in a first predetermined format, and adds information related to time or recording position, defined by a second format different from the first format, to the video/audio data formatted in the first format. Formatting block 1706 comprises DVD-Video format information generator unit 177 which implements first format information generating means for generating information related to time or recording position defined by the DVD-Video Version 1.X format or DVD-Video Version 2.X format, which is the first format, for incoming video/audio data 102; DVD+VR format information generator unit 178 which implements second format information generating means for generating information related to time or recording position defined by the DVD+VR format, which is a second format, for incoming video/audio data 102; DVD-VR format information generator unit 179 which implements the second format information generating means for generating information related to time or recording position defined by the DVD-VR format, which is a second format, for incoming video/audio data 102; DVD-SR format information generator unit 180 which implements the second format information generating means for generating information related to time or recording position defined by the DVD-SR format, which is a second format, for incoming video/audio data 102; DVD-HDVR format information generator unit 181 which implements the second format information generating means for generating information related to time or recording position defined by the DVD-HDVR format, which is a second format, for incoming video/audio data 102; BRD format information generator unit 182 which implements the second format information generating means for generating information related to time or recording position defined by the BRD format, which is a second format, for incoming video/audio data 102; recording formatting unit 1703 for adding the information related to time or recording position generated by format information generator unit 177 to incoming video/audio data 102 to format video/audio data 102 in the DVD-Video Version 1.X format or DVD-Video Version 2.X format; and information adder unit 1705 for adding the information related to time or recording position generated by the DVD+VR format information generator unit 178, DVD-VR format information generator unit 179, DVD-SR format information generator unit 180, DVD-HDVR format information generator unit 181, and BRD format information generator unit 182, to the video/audio data formatted by recording formatting unit 1703.

In this embodiment, as video/audio data 102 is received from the outside, incoming video/audio data 102 is first applied to DVD-Video format information generator unit 177, DVD+VR format information generator unit 178, DVD-VR format information generator unit 179, DVD-SR format information generator unit 180, DVD-HDVR format information generator unit 181, BRD format information generator unit 182, and recording formatting unit 1703 of formatting block 1706.

In response, DVD-Video format information generator unit 177 generates information related to time or recording position defined by the DVD-Video Version 1.X format or DVD-Video Version 2.X format for video/audio data 102 applied thereto; DVD+VR format information generator unit 178 generates information related to time or recording position defined by the DVD+VR format for video/audio data 102 applied thereto; DVD-VR format information generator unit 179 generates information related to time or recording position defined by the DVD-VR format for video/audio data 102 applied thereto; DVD-SR format information generator unit 180 generates information related to time or recording position defined by the DVD-SR format for video/audio data 102 applied thereto; DVD-HDVR format information generator unit 181 generates information related to time or recording position defined by the DVD-HDVR format for video/audio data 102 applied thereto; and BRD format information generator unit 182 generates information related to time or recording position defined by the BRD format for video/audio data 102 applied thereto.

Next, recording formatting unit 1703 adds the information related to time or recording position, generated by DVD-Video format information generator unit 177, to video/audio data 102 applied thereto to format video/audio data 102 in the DVD-Video Version 1.X format or DVD-Video Version 2.X format.

Next, information adder unit 1705 adds the information related to time or recording position generated by DVD+VR format information generator unit 178, DVD-VR format information generator unit 179, DVD-SR format information generator unit 180, DVD-HDVR format information generator unit 181, and BRD format information generator unit 182, to the video/audio data formatted by recording formatting unit 1703.

Subsequently, the video/audio data formatted by recording formatting unit 1703, and the information related to time or recording position, added to the video/audio data by information adder unit 1705, are recorded on hard disk 106a by HDD driver 106 or recorded on a DVD by DVD recorder 112, under the control of control block 105 which is applied with control signal 104.

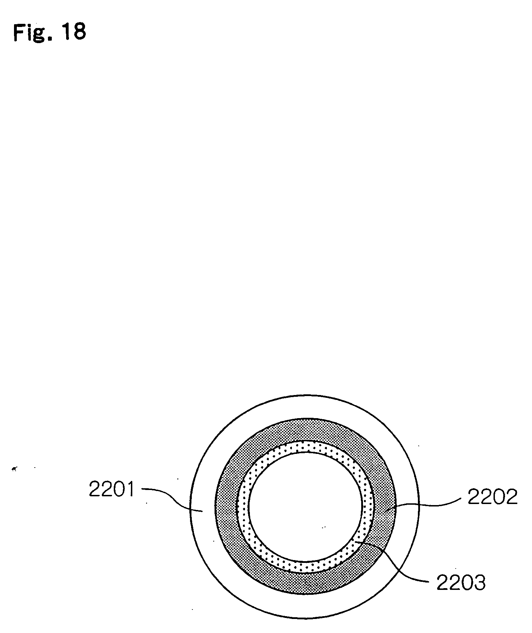

Fig. 18 is a diagram illustrating how video/audio data formatted by recording formatter unit 1703 shown in Fig. 17 and information related to time or recording position added thereto by information adder unit 1705 are recorded on a DVD by DVD recorder 112.

As illustrated in Fig. 18, DVD 2201, on which the video/audio data is to be recorded by DVD recorder 112, has first recording area 2202 in which formatted video/audio data is recorded, so that the video/audio data formatted by recording formatter unit 1703 is recorded in this recording area 2202. Specifically, recording area 2202 has recorded thereon video/audio data 102, as well as the information related to time or recording position generated by DVD-Video format information generator unit 177, added to video/audio data 102. DVD 2201 also has second recording area 2203, separate from first recording area 2202, such as a user data area, in which recorded is information related to time or recording position generated by DVD+VR format information generator unit 178, DVD-VR format information generator unit 179, DVD-SR format information generator unit 180, DVD-HDVR format information generator unit 181, and BRD format information generator unit 182.

DVD+VR format information generator unit 178, DVD-VR format information generator unit 179, DVD-SR format information generator unit 180, DVD-HDVR format information generator unit 181, and BRD format information generator unit 182 may generate a VOB start time, a SOB start time, a TMU start time, a VOBU start time, a SOBU_HD start time, a SOBU start time, a PacketGroup start time, a VOB address, a SOB address, a TMU address, a VOBU address, a SOBU_HD address, a SOBU address, a PacketGroup address, VTS_VOBU_SA, VOBU_EA, VOBU_1STREF_EA, VOBU_2NDREF_EA, VOBU_3RDREF_EA, FWDI, BWDI, A_SYNCA, SP_SYNCA conforming to the DVD-Video Version 1.X format and DVD-Video Version 2.X format, VTS_VOBU_SA, VOBU_1 STREF_EA, VOBU_2NDREF_EA, VOBU_3RDREF_EA, VOBU_EA, FWDI, BWDI, A_SYNCHA, SP_SYNCA conforming to the DVD+VR format, TM_ENT_Ns, VOBU_ENT_Ns, TM_OFS, ADR_OFS, TM_DIFF, VOBU_ENTN, VOBU_ADR, 1 STREF_SZ, VOBU_PB_TM, VOBU_SZ conforming to the DVD-VR format or DVD-HDVR format, IAPAT, AUSM, AUEM conforming to the DVD-SR format, and PATS conforming to the DVD-HDVR format, and among such information, information defined by at least one of the DVD+VR format, DVD-VR format, DVD-SR format, and DVD-HDVR format may be recorded on hard disk 106a by HDD driver 106, or recorded on a DVD by DVD recorder 112.

Also, each of DVD+VR format information generator unit 178, DVD-VR format information generator unit 179, DVD-SR format information generator unit 180, DVD-HDVR format information generator unit 181, and BRD format information generator unit 182 may generate temporal information on the relationship between recording units and temporal information per fixed recording unit, defined by the DVD+VR format, DVD-VR format, DVD-SR format, DVD-HDVR format, and BRD format associated therewith, and at least one of the temporal information on the relationship between recording units and temporal information per fixed recording unit may be recorded on hard disc 106a by HDD driver 106 or recorded on a DVD by DVD recorder 112 as additional information.

Also, in this embodiment, incoming video/audio data 102 is formatted in the DVD-Video Version 1.X format or DVD-Video Version 2.X format, and information related to time or recording position defined by the DVD+VR format, or DVD-VR format, or DVD-SR format, or DVD-HDVR format, or BRD format is added to the formatted video/audio data. Alternatively, incoming video/audio data 102 may be formatted in any of the DVD-Video Version 1.X format, DVD-Video Version 2.X format, DVD+VR format, DVD-VR format, DVD-SR format, DVD-HDVR format, and BRD format, and information related to time or recording position defined by another format may be added to the formatted video/audio data. The number of formats in which the information related to time or recording position is added to the video/audio data is not limited to five. In this event, among a time difference between the head of SOBU or PacketGroup and the head of TMU; a SOBU or PacketGroup number at the head of TMU; a start address of SOBU or PacketGroup at the head of TMU; a time difference between the head of SUB or PacketGroup and the head of VOBU; a SOBU or PacketGroup number at the head of VOBU; the start address of SOBU or PacketGroup at the head of VOBU; a time difference between the head of SOBU or PacketGroup and the head of SOBU_HD; a SOBU or PacketGroup number at the head of SOBU_HD; a start address of SOBU or PacketGroup at the head of SOBU_HD; and the temporal information, the number of frames, and the number of fields per SOBU or PacketGroup, at least one may be recorded as additional information on hard disk 106a by HDD driver 106, or recorded on a DVD by DVD recorder 112.

The remaining operation in this embodiment is similar to that shown in the first embodiment, so that description thereon is omitted here.

While the foregoing two embodiments have been described in connection with HDD/DVD combination video recorders 101, 1701, respectively, which have been given as examples of the video recording/reproducing apparatus of the present invention, the one shown in the first embodiment may be implemented as a video recording apparatus which comprises only DVD multi-logical format conversion block 103, control block 105, HDD driver 106, and DVD recorder 112, while the one shown in the second embodiment may be implemented as a video recording apparatus which comprises only formatting block 1706, control block 105, HDD driver 106, and DVD recorder 112.

As described above, the video recording/reproducing apparatus according to the second embodiment records, on hard disk 106a or a DVD, incoming video audio data 102 formatted in the DVD-Video Version 1.X format or DVD-Video Version 2.X format, and information related to time or recording position defined by the DVD+VR format, DVD-VR format, DVD-SR format, DVD-HDVR format, and BRD format, different from the DVD-Video Version 1.X format or DVD-Video Version 2.X format, for video/audio data 102. With such information, video/audio data 102 recorded on hard disk 106a or DVD can be readily converted from one format to another when it is dubbed to another type of recording medium.

### (Third Embodiment)

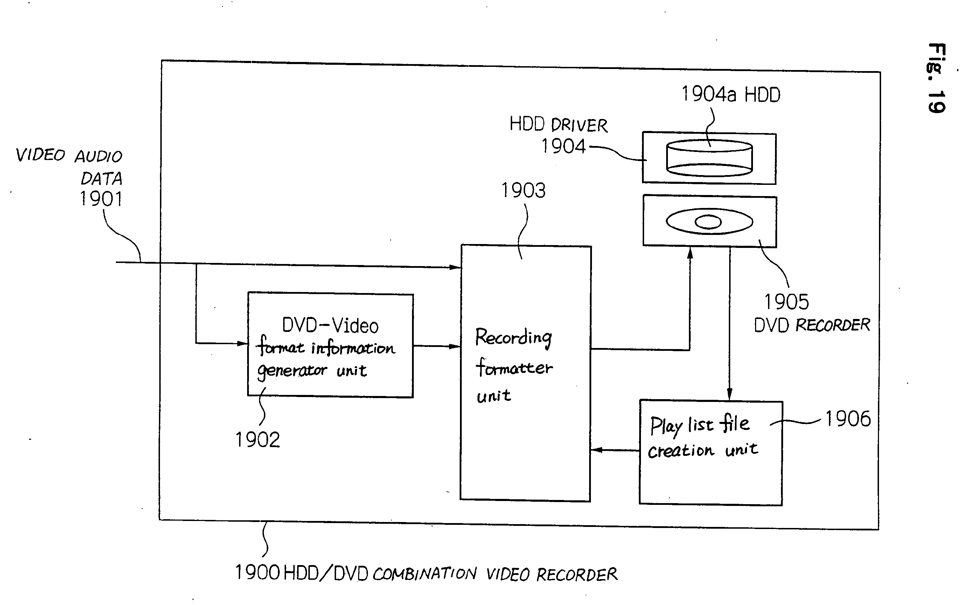

Fig. 19 is a block diagram illustrating a third embodiment of the video recording/reproducing apparatus according to the present invention (HDD/DVD combination recorder 1900).

As illustrated in Fig. 19, HDD/DVD combination recorder 1900 comprises DVD-Video format information generator unit 1902 for generating information related to time or recording position, defined by the DVD-Video Version 1.X format or DVD-Video Version 2.X format, for incoming video/audio data 1901; play list file creation unit 1906 for creating a play list file, which is built by a file form independent of video/audio data, for specifying an order in which HDD/DVD combination recorder 1900 reproduces video/audio data recorded on hard disk 1904 or a DVD; recording formatter unit 1903 for adding the information related to time or recording position generated by DVD-Video format information generator unit 1902 to incoming video/audio data 1901 to format video/audio data 1901, and for adding the play list file created by play list file creation unit 1906 to the formatted video audio data; HDD driver 1904 for recording the video/audio data formatted by recording formatter unit 1903, and the play list file added thereto on hard disk 1904a; and DVD recorder 1905 for recording on a DVD the video/audio data formatted by recording formatter unit 1903, and the play list file added thereto.

In HDD/DVD combination recorder 1900 configured as described above, as video/audio data 1901 is received, DVD-Video format information generator unit 1902 generates information related to time or recording position defined by the DVD-Video Version 1.X format or DVD-Video Version 2.X format, for incoming video/audio data 1901.

Play list file creation unit 1906 specifies an order in which HDD/DVD combination recorder 1900 reproduces video/audio data recorded on hard disk 1904a or DVD, and creates a play list file built in a file form independent of the video/audio data. Here, the play list refers to a function of automatically reproducing video/audio data recorded on hard disk 1904a or DVD in a range specified by the user and in accordance with a playing order specified by the user.

Next, recording formatter unit 1903 adds the information related to time or recording position generated by DVD-Video format information generator unit 1902 to incoming video/audio data 1901 to format video audio data 1901, and adds the play list file created by play list file creation unit 1906 to the formatted video/audio data.

Subsequently, the video/audio data formatted by recording formatter unit 1903, and the play list file added thereto are recorded on hard disk 1904a by HDD driver 1904, or on a DVD by DVD recorder 1905.

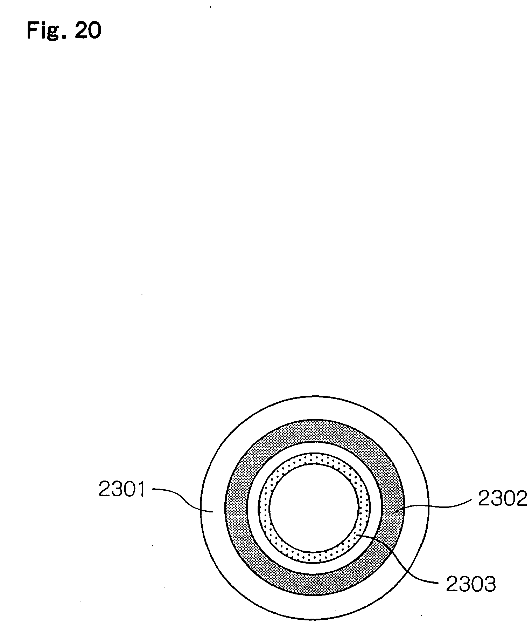

Fig. 20 is a diagram illustrating how video/audio data formatted by recording formatter unit 1903 shown in Fig. 19 and the play list file created by play list file creation unit 1906 are recorded on a DVD by DVD recorder 112.

As illustrated in Fig. 20, DVD 2301, on which the video/audio data is to be recorded by DVD recorder 112, has first recording area 2302 in which formatted video/audio data is recorded, so that the video/audio data formatted by recording formatter unit 1903 is recorded in this recording area 2302. Specifically, recording area 2302 has recorded thereon video/audio data 102, as well as the information related to time or recording position generated by DVD-Video format information generator unit 1902, added to video/audio data 102. DVD 2301 also has second recording area 2303, separate from first recording area 2302, such as a user data area, in which recorded is the play list file created by play list file creation unit 1906.

Here, the DVD-Video Version 1.X format or DVD-Video Version 2.X format differ from the DVD+VR format, DVD-VR format, DVD-SR format, DVD-HDVR format, and BRD format from one another in a method of specifying video/audio data. For this reason, when play list file creation unit 1904 creates the play list file built in a file form independent of the video audio data, every scene can be extracted even from among different titles, and arbitrarily connected in a seamless or non-seamless fashion for reproduction. (Fourth Embodiment)

Fig. 21 is a block diagram illustrating a fourth embodiment of the video recording apparatus according to the present invention (HDD/DVD combination video recorder 2000).

As illustrated in Fig. 21, HDD/DVD combination video recorder 2000 comprises format setting unit 2002 for setting a format in accordance with incoming video/audio data 2001; format information generator unit 2003 for generating information related to time or recording position defined by the format set by format setting unit 2002; recording formatter unit 2004 for adding the information related to time or recording position generated by format information generator unit 2003 to video/audio data 2001 to format video/audio data 2001; HDD driver 2005 for recording the video/audio data formatted by recording formatter unit 2004 on hard disk 2005a; and DVD recorder 2006 for recording the video/audio data formatted by recording formatter unit 2004 on a DVD.

In HDD/DVD combination video recorder 2000 configured as described above, as video/audio data 2001 is received, format setting unit 2002 first sets a format in accordance with video/audio data 2001. For example, when video/audio data 2001 representative of analog broadcasting is applied to HDD/DVD combination video recorder 2000, format setting unit 2002 sets the DVD-VR format. Alternatively, when video/audio data 2001 representative of digital HDTV broadcasting is applied to HDD/DVD combination video recorder 2000, format setting unit 2002 sets the DVD-HDVR format.

Next, format information generator unit 2003 generates information related to time or recording position defined by the format set by format setting unit 2002 for video/audio data 2001. For example, when format setting unit 2002 has set the DVD-VR format, format information generator unit 2003 generates information related to time or recording position defined by the DVD-VR format. When format setting unit 2002 has set the DVD-SR format, format information generator unit 2003 generates information related to time or recording position defined by DVD-SR format. When format setting unit 2002 has set the DVD-HDVR format, format information generator unit 2003 generates information related to time or recording position defined by DVD-HDVR format.

Next, recording formatter unit 2004 adds the information related to time or recording position generated by format information generator unit 2003 to incoming video/audio data 2001 to format video/audio data 2001.

Subsequently, the video/audio data formatted by recording formatter unit 2004 may be recorded on hard disk 2005a by HDD driver 2005, or recorded on a DVD by DVD recorder 2005.

While in the foregoing embodiment, format setting unit 2002 sets a format in accordance with incoming video/audio data 2001, format setting unit 2002 may set a format in accordance with the type of a DVD on which video/audio data 2001 is to be recorded (particularly, the physical properties of a disc medium loaded into HDD/DVD combination video recorder 2000 when an optical disc is concerned).

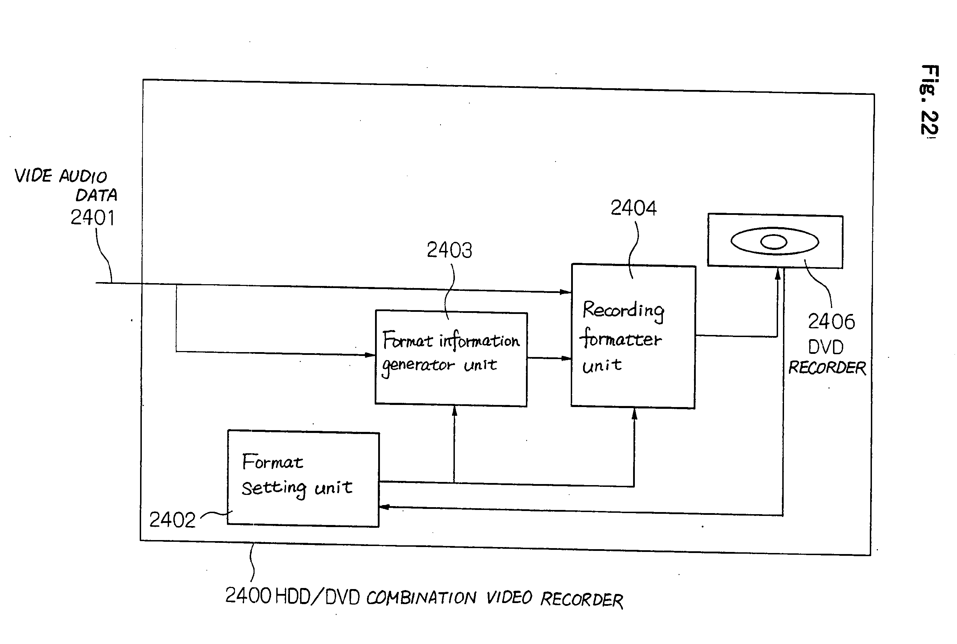

Fig. 22 is a block diagram illustrating an exemplary video recording apparatus (HDD/DVD combination video recorder 2400) which sets a format in accordance with the type of a DVD on which video/audio data is to be recorded.

As illustrated in Fig. 22, HDD/DVD combination video recorder 2400 comprises DVD recorder 2406 which determines the type of a DVD on which video/audio data 2401 is to be recorded; format setting unit 2402 for setting a format in accordance with the determined type; format information generator unit 2403 for generating information related to time or recording position defined by the format set by formate setting unit 2402; recording formatter unit 2404 for adding the information related to time or recording position generated by format information generator unit 2403 to video/audio data 2401 to format video/audio data 2401; and DVD recorder 2406 for recording the video/audio data formatted by recording formatter unit 2404 on a DVD.

In HDD/DVD combination video recorder 2400 configured as described above, as DVD recorder 2406 is loaded with a DVD for recording video/audio data 2401 thereon, format setting unit 2402 automatically determines the type of the DVD loaded into DVD recorder 2406 to set a format in accordance with the type of the DVD determined thereby. For example, when video/audio data 2401 is to be recorded on a blue LD compatible DVD disk, format setting unit 2402 automatically sets the DVD-HDVR format. Alternatively, when video/audio data 2401 is to be recorded on a BRD disc, format setting unit 2402 automatically sets the BRD format. Further alternatively, when video/audio data 2401 is to be recorded on a DVD+RW disc, format setting unit 2402 automatically sets the DVD+VR format. Moreover, when video/audio data 2401 is to be recorded on a DVD-RW disc, format setting unit 2402 automatically sets the DVD-VR or DVD-SR format.

Subsequently, as video/audio data 2401 is received, format information generator unit 2403 generates information related to time or recording position defined by the format set by format setting unit 2402 for video/audio data 2401. For example, when format setting unit 2402 sets the DVD-VR format, format information generator unit 2403 generates information related to time or recording position defined by the DVD-VR format. When format setting unit 2402 sets the DVD-SR format, format information generator unit 2403 generates information related to time or recording position defined by the DVD-SR format. When format setting unit 2402 sets the DVD-HDVR format, format information generator unit 2403 generates information related to time or recording position defined by the DVD-HDVR format. When format setting unit 2402 sets the BRD format, format information generator unit 2403 generates information related to time or recording position defined by the BRD format.

Next, recording formatter unit 2404 adds the information related to time or recording position generated by format information generator unit 2403 to incoming video/audio data 2401 to format video/audio data 2401.

Subsequently, the video/audio data formatted by recording formatter unit 2404 is recorded on a DVD by DVD recorder 2405.

The foregoing two examples may be used in combination.

For example, assuming that video/audio data is to be recorded on a blue LD compatible disc or a DV-DVD disc, and the combined HDD/DVD combination video recorder receives video/audio data representative of analog broadcasting or in analog form, the format setting unit automatically sets VOB of the DVD-HDVR format. When video/audio data is recorded on a blue LD compatible DVD-disc or an HD-DVD disc, and the combined HDD/DVD combination video recorder receives video/audio data representative of digital broadcasting or in digital form, the format setting unit automatically sets SOB of the DVD-HDVR format. When video/audio data is to be recorded on a BRD disc, the format setting unit automatically sets the BRD format. When video/audio data is to be recorded on a DVD-RW disc, and the combined HDD/DVD combination video recorder receives video/audio data representative of analog broadcasting or in analog form, the format setting unit automatically sets the DVD-SR format. Eventually, the video/audio data is recorded in a format set by the format setting unit.

In this way, the user need not select a logical format in accordance with incoming video/audio data, and the type of a DVD on which the video/audio data is to be recorded.

It should be noted that while any of the HDD/DVD combination video recorders in the foregoing embodiments records all temporal or positional information related to the DVD+VR format, DVD-VR format, DVD-SR format, DVD-HDVR format, and BRD format, the HDD/DVD combination video recorder may actually record part of the temporal/positional information.

For example, temporal or positional information may be recorded only for the DVD-Video Version 1.X format, DVD-Video Version 2.X format, DVD-VR format, DVD-SR format, and DVD-HDVR format, BRD format, in which case, though exact values are required for all of data FWDI_240 - FWDI_1, BWDI_1 - BWDI_240 in conformity to DVD-Video, the conversion can be readily accomplished from the hard disk to the DVD-Video Version 1.X format, DVD-Video Version 2.X format, DVD-VR format, DVD-SR format, DVD-HDVR format, and BRD format.

Alternatively, temporal or positional information related to the DVD-VR format, DVD-SR format, DVD-HDVR format, and BRD format may be recorded in a user data area of a DVD-Video, such that this data can be readily converted into the DVD-VR format, DVD-SR format, DVD-HDVR format, or BRD format. Likewise, temporal or positional information related to the DVD-Video format or DVD-SR format may be recorded in a user data area of the DVD-VR format or DVD-HDVR format, such that this data can be readily converted into the DVD-Video format or DVD-SR format. Also, temporal or positional information related to the DVD-Video format, DVD-VR format, and DVD-HDVR format may be recorded in a user data area of DVD-SR, such that this data can be readily converted into the DVD-Video format, DVD-VR format or DVD-HDVR format.

It should be understood that in the present invention, the processing within the video recording/reproducing apparatus may be executed by a program which implements functions of the apparatus, other than the foregoing dedicated hardware. In such a program-base implementation, the program is recorded on a readable recording medium, and the program recorded on the recording medium is read into the video recording/reproducing apparatus for execution. The recording medium readable in the video recording/reproducing apparatus refers to a portable recording medium such as a floppy disk, a magneto-optical disc, DVD, CD, and the like, as well as HDD and the like contained in the video recording/reproducing apparatus. The program recorded on such a recording medium may be read, for example, by the control block, such that similar processing to the foregoing is performed under the control of the control block.

While a preferred embodiment of the present invention has been described in specific terms, such description is for illustrative purpose only, and it is to be understood that changes and variations may be made without departing from the spirit or scope of the following claims.

According to an embodiment, as a video stream is applied, a plurality of format information generator units generate information related to time or recording position defined by respective formats different from one another. Next, a formatter unit adds the information related to time or recording position generated by each of the plurality of format information generator units to the incoming video stream to format the video stream. Subsequently, a recorder records the information related to time or recording position added to the video stream by the formatter unit on a recording medium together with the video stream.

## Claims

1. A video recording apparatus for recording a video stream on a recording medium, comprising:
a plurality of format information generating means for generating respective information related to time or recording position defined by different formats from one another for the video stream;
formatting means for adding the information related to time or recording position generated by each of said plurality of format information generating means to the video stream to format the video stream; and
recording means for recording the information related to time or recording position added to the video stream by said formatting means on a recording medium together with the video stream.

2. The video recording apparatus according to claim 1, wherein:
said format information generating means generates the information related to time or recording position defined by at least two formats from among the information related to time or recording position defined by a format intended for a stream exclusive to reproduction, a format intended for recording/reproduction stream, and a format intended for a recording/reproduction stream recorded as a broadcasting or transmission stream.

3. The video recording apparatus according to claim 1 or 2, wherein:
said format information generating means generates information defined by at least two formats, selected from the information on time associated with data, information on recording position, information on a relationship between a picture type and a recording position, information on a relationship between a video or an audio or a sub-picture and a recording position, information on recording start/end positions per video data compression unit, information on a relationship between constant recording units, and recording start information generated each time recording is started, said information being defined in each of the format intended for a stream exclusive to reproduction, the format intended for a recording/reproduction stream, and the format intended for a recording/reproduction stream recorded as a broadcasting or transmission stream.

4. The video recording apparatus according to one of the preceding claims, wherein:
said format information generating means classifies the stream exclusive to reproduction into a stream conforming to the DVD-Video Version 1.X format, a stream conforming to DVD-Video Version 2.X or HD-DVD9, or a stream conforming to the BRD format;
said format information generating means classifies the recording/reproduction stream into a stream conforming to the DVD+VR format, a stream conforming to the DVD-VR format, a stream conforming to the DVD-HDVR format, or a stream conforming to the BRD format; and
said format information generating means classifies the recording/reproduction stream recorded as a broadcasting or transmission stream into a stream conforming to the DVD-SR format, a stream conforming to the DVD-HDVR format, or a stream conforming to the BRD format.

5. The video recording apparatus according to one of the preceding claims, wherein, the type of stream is assumed to be a video/audio stream, a collection of data recorded at one time is designated by VOB (Video Object), a collection of data recorded at one time as a broadcasting or transmission stream is designated by SOB (Stream Object), a collection of fixed video field data is designated by TMU (Time Map Unit), a collection of one or more GOP (Group Of Pictures) data in a recording/reproduction stream is designated by VOBU (Video Object Unit), a collection of one or more GOP data in a recording/reproduction stream recorded as a broadcasting or transmission stream is designated by SOBU_HD (Stream Object Unit_HD), a collection of data having a fixed number of bits is designated by SOBU (Stream Object Unit), and a collection of data having another fixed number of bits is designated by PacketGroup, wherein:
said format information generating means generates the information on time associated with data, said information including a VOB start time, a SOB start time, a TMU start time, a VOBU start time, a SOBU_HD start time, a SOBU start time, a PacketGroup start time, VOBU_PB_TM defined by the DVD-VR format or DVD-HDVR format, IAPAT (Incremental Packet Arrival Time) defined by the DVD-SR format, and PATS (Packet Arrival Time Stamp) defined by the DVD-HDVR format;
said format information generating means generates the information on a position at which data is recorded, said information including a VOB address, a SOB address, a TMU address, a VOBU address, a SOBU_HD address, a SOBU address, a PacketGroup address, VTS_VOBU_SA, VOBU_EA, FWDI, BWDI defined by the DVD-Video Version 1.X, DVD-Vldeo Version 2.X, or DVD+VR format, and VOBU_SZ defined by the DVD-VR or DVD-HDVR format;
said format information generating means generates the information on the relationship between the picture type and a recording position, said information including VOBU_1STREF_EA, VOBU_2NDREF_EA, and VOBU_3RDREF_EA defined by the DVD-Video Version 1.X format, DVD-Video Version 2.X format, or DVD+VR format, and 1_STREF_SZ defined by the DVD-VR format or DVD-HDVR format;
said format information generating means generates the information on the relationship between a video or audio or sub-picture and a recording position, said information including A_SYNCA and SP_SYNCA defined by the DVD-Video Version 1.X format, DVD-Video Version 2.X format, or DVD+VR format;
said format information generating means generates the information on recording start/end positions per video data compression unit, said information including AUSM, AUEM defined by the DVD-SR format;
said format information generating means generates the information on the relationship between fixed recording units, said information including TM_DIFF, VOBU_ENTN, VOBU_ADR defined by the DVD-VR format or DVD-HDVR format; and
said format information generating means generates the recording start information generated each time recording is started, said information including TM_ENT_Ns, VOBU_ENT_Ns, TM_OFS, and ADR_OFS defined by the DVD-VR format or DVD-HDVR format.

6. The video recording apparatus according to claim 1, wherein:
said format information generating means generates temporal information on a relationship between recording units, and temporal information per fixed recording unit defined in each of a format intended for a stream exclusive to reproduction, a format intended for recording/reproduction stream, and a format intended for a recording/reproduction stream recorded as a broadcasting or transmission stream; and
said recording means records at least one of the temporal information on a relationship between recording units and the temporal information per fixed recording unit generated by said format information generating means on a recording medium as additional information.

7. The video recording apparatus according to one of the preceding claims, wherein:
said format information generating means generates the temporal information on the relationship between recording units, said information including a time difference between the head of SOBU or PacketGroup and the head of TMU; a SOBU or PacketGroup number at the head of TMU; a start address of SOBU or PacketGroup at the head of TMU; a time difference between the head of SOBU or PacketGroup and the head of VOBU; a SOBU or PacketGroup number at the head of VOBU; a start address of SOBU or PacketGroup at the head of VOBU; a time difference between the head of SOBU or PacketGroup and the head of SOBU_HD; a SOBU or PacketGroup number at the head of SOBU_HD; and a start address of SOBU or PacketGroup at the head of SOBU_HD; and
said format information generating means generates the temporal information per fixed recording unit, said information including temporal information or the number of frames or the number of fields per SOBU or PacketGroup.

8. A video recording apparatus for formatting a video stream in a predetermined first format and recording the formatted video stream on a recording medium, said apparatus comprising:
first format information generating means for generating information on time or recording position defined by the first format for the video stream;
formatting means for adding the information on time or recording position generated by said first format information generating means to the video stream to format the video stream in the first format;
second format information generating means for generating information related to time or recording position defined by a second format different from the first format for the video stream;
information adding means for adding the information on time or recording position generated by said second format information generating means to the video stream formatted by said formatting means; and
recording means for recording the information related to time or recording position added to the video stream formatted by said information adding means on a recording medium together with the formatted video stream.

9. The video recording apparatus according to claim 8, wherein:
said recording means records information related to time or recording position generated by said second format information generating means in a recording area of the recording medium other than a recording area for recording the video stream therein

10. The video recording apparatus according to claim 8 or 9, wherein:
said recording means records, in the recording area other than the recording area for recording the video stream therein, information defined by at least one format except for the first format, said information being selected from a VOB start time, a SOB start time, a TMU start time, a VOBU start time, a SOBU_HD start time, a SOBU start time, a PacketGroup start time, a VOB address, a SOB address, a TMU address, a VOBU address, a SOBU_HD address, a SOBU address, and a PacketGroup address; VTS_VOBU_SA, VOBU_EA, VOBU_1STREF_EA, VOBU_2NDREF_EA, VOBU_3RDREF_EA, FWDI, BWDI, A_SYNCA, SP_SYNCA conforming to the DVD-Video Version 1.X or DVD-Video Version 2.X; VTS_VOBU_SA, VOBU_1STREF_EA, VOBU_2NDREF_EA, VOBU_3RDREF_EA, VOBU_EA, FWDI, BWDI, A_SYNCHA, SP_SYNCA conforming to the DVD+VR format; TM_ENT_Ns, VOBU_ENT_Ns, TM_OFS, ADR_OFS, TM_DIFF, VOBU_ENTN, VOBU_ADR, 1 STREF_SZ, VOBU_PB_TM, VOBU_SZ conforming to the DVD-VR format or DVD-HDVR format; IAPAT, AUSM, AUEM conforming to the DVD-SR format; and PATS conforming to the DVD-HDVR format.

11. The video recording apparatus according to one of claims 8 to 10, wherein:
said second format information generating means generates temporal information on a relationship between recording units and temporal information per fixed recording unit defined in the second format; and
said recording means records at least one of the temporal information on a relationship between recording units and the temporal information per fixed recording unit generated by said second format information generating means on a recording medium as additional information.

12. The video recording apparatus according to one of claims 8 to 11, wherein:
said recording means records on a recording medium a video stream conforming to the DVD-Video Version 1.X format, or DVD-Video Version 2.X format, or DVD+VR format, or DVD-VR format, or DVD-SR format, or DVD-HDVR format, or BRD format, and records on the recording medium the additional information including at least one of a time difference between the head of SOBU or PacketGroup and the head of TMU; a SOBU or PacketGroup number at the head of TMU; a start address of SOBU or PacketGroup at the head of TMU; a time difference between the head of SOBU or PacketGroup and the head of VOBU; a SOBU or PacketGroup number at the head of VOBU; a start address of SOBU or PacketGroup at the head of VOBU; a time difference between the head of SOBU or PacketGroup and the head of SOBU_HD; a SOBU or PacketGroup number at the head of SOBU_HD; a start address of SOBU or PacketGroup at the head of SOBU_HD; and temporal information, the number of frames or the number of fields per SOBU or PacketGroup.

13. A video recording/reproducing apparatus comprising:
converting means for converting information on time or recording position defined by a format in accordance with the type of a recording medium for a video stream recorded in said format on said recording medium into information on time or recording medium defined by a format in accordance with the type of a recording medium loaded into said video recording/reproducing apparatus; and
formatting means for adding the information related to time or recording position converted by said converting means to the video stream to convert the format of the video stream.

14. The video recording/reproducing apparatus according to claim 13, wherein:
said converting means converts one piece of information defined by the format in accordance with the type of said recording medium into information defined by the format in accordance with the type of the other recording medium, said information converted by said converting means being selected from a VOB start time, a SOB start time, a TMU start time, a VOBU start time, a SOBU_HD start time, a SOBU start time, a PacketGroup start time, a VOB address, a SOB address, a TMU address, a VOBU address, a SOBU_HD address, a SOBU address, and a PacketGroup address; VTS_VOBU_SA, VOBU_EA, VOBU_1 STREF_EA, VOBU_2NDREF_EA, VOBU_3RDREF_EA, FWDI, BWDI, A_SYNCA, SP_SYNCA conforming to the DVD-Video Version 1.X or DVD-Video Version 2.X; VTS_VOBU_SA, VOBU_1STREF_EA, VOBU_2NDREF_EA, VOBU_3RDREF_EA, VOBU_EA, FWDI, BWDI, A_SYNCHA, SP_SYNCA conforming to the DVD+VR format; TM_ENT_Ns, VOBU_ENT_Ns, TM_OFS, ADR_OFS, TM_DIFF, VOBU_ENTN, VOBU_ADR, 1STREF_SZ, VOBU_PB_TM, VOBU_SZ conforming to the DVD-VR format or DVD-HDVR format; IAPAT, AUSM, AUEM conforming to the DVD-SR format; and PATS conforming to the DVD-HDVR format.

15. The video recording/reproducing according to claim 13 or 14, wherein:
said converting means converts temporal information on a relationship between recording units and temporal information per fixed recording unit defined in the format in accordance with the type of said recording medium into information defined by the format in accordance with the type of the other recording medium; and
said recording means records at least one of the temporal information on a relationship between recording units and the temporal information per fixed recording unit converted by said converting means on a recording medium as additional information.

16. The video recording/reproducing according to one of claims 13 to 15, wherein: wherein:
said recording means records on a recording medium a video stream conforming to the DVD-Video Version 1.X format, or DVD-Video Version 2.X format, or DVD+VR format, or DVD-VR format, or DVD-SR format, or DVD-HDVR format, or BRD format, and records on the recording medium the additional information including at least one of a time difference between the head of SOBU or PacketGroup and the head of TMU; a SOBU or PacketGroup number at the head of TMU; a start address of SOBU or PacketGroup at the head of TMU; a time difference between the head of SOBU or PacketGroup and the head of VOBU; a SOBU or PacketGroup number at the head of VOBU; a start address of SOBU or PacketGroup at the head of VOBU; a time difference between the head of SOBU or PacketGroup and the head of SOBU_HD; a SOBU or PacketGroup number at the head of SOBU_HD; a start address of SOBU or PacketGroup at the head of SOBU_HD; and temporal information, the number of frames or the number of fields per SOBU or PacketGroup.

17. A video recording/reproducing apparatus for formatting a video stream in a predetermined format to record the formatted video stream on a recording medium, and for reproducing a video stream recorded on the recording medium, said apparatus comprising:
format information generating means for generating information on time or recording position defined by the format for the video stream;
formatting means for adding the information related to time or recording position generated by said format information generating means to the video stream to format the video stream;
recording means for recording the video stream formatted by said formatting means on a recording medium; and
play list file creating means for creating a play list file built in a file form independent of the video stream for specifying an order of reproducing video streams recorded on the recording medium, wherein:
said formatting means adds the play list file created by said play list creating means to the formatted video stream, and
said recording means records the play list file added to the video stream by said formatting means on the recording medium.

18. The video recording/reproducing apparatus according to claim 17, wherein:
said recording means records the play list file in a recording area of the recording medium out of a recording area for recording the video stream.

19. A video recording apparatus for recording a video stream on a recording medium, comprising:
format setting means for setting a format in accordance with the type of the recording medium or with the video stream;
format information generating means for generating information related to time or recording position defined by the format set by said format setting means for the video stream;
formatting means for adding the information related to time or recording position generated by said format information generating means to the video stream to format the video stream; and
recording means for recording the video stream formatted by said formatting means on a recording medium.

20. The video recording apparatus according to claim 19, wherein:
said format setting means sets the DVD-HDVR format when the recording medium is a DVD disc or a HD-DVD disc which is compatible with a blue LD; sets the BRD format when the recording medium is a BRD disc; sets the DVD+VR format when the recording medium is a DVD+RW disc; and sets the DVD-VR format or DVD-SR format when the recording medium is a DVD-RW disc.

21. The video recording apparatus according to claim 19, wherein:
said format setting means sets VOB of the DVD-HDVR format when the recording medium is a DVD disc or an HD-DVD disc which is compatible with a blue LD, and analog data is applied to said video recording apparatus as the video stream; sets SOB of the DVD-HDVR format when the recording medium is a DVD disc or an HD-DVD disc, and digital data is applied to said video recording apparatus as the video stream; sets the BRD format when the recording medium is a BRD disc; sets the DVD-VR format when the recording medium is a DVD-RW disc, and analog data is applied to said video recording apparatus as the video stream; and sets the DVD-SR format when the recording medium is a DVD-RW disc, and digital data is applied to said video recording apparatus as the video stream.
the video stream; sets SOB of the DVD-HDVR format when the recording medium is a DVD disc or an HD-DVD disc, and digital data is applied to said video recording apparatus as the video stream; sets the BRD format when the recording medium is a BRD disc; sets the DVD-VR format when the recording medium is a DVD-RW disc, and analog data is applied to said video recording apparatus as the video stream; and sets the DVD-SR format when the recording medium is a DVD-RW disc, and digital data is applied to said video recording apparatus as the video stream.

22. A recording medium for recording a video stream thereon, comprising:
a recording area which has recorded thereon the video stream, and information on time or recording position defined by formats different from one another for the video stream.

23. A recording medium for recording a video stream thereon, comprising:
a first recording area having recorded thereon the video stream, and information related to time or recording position defined by a first format for the video stream, as a video stream formatted in said first format; and
a second recording area for recording information related to time or recording position defined by a second format different from the first format for the video stream.

24. A recording medium for recording a video stream thereon, comprising:
a first recording area having recorded thereon the video stream, and information related to time or recording position defined by a predetermined format for the video stream, as a formatted video stream; and
a third recording area having recorded thereon a play list file for specifying an order of reproducing video streams recorded in said first recording area.

25. A video recording method for recording a video stream on a recording medium, comprising the steps of:
generating a plurality of pieces of information related to time or recording position defined by respective formats different from one another for the video stream;
adding the plurality of pieces of information related to time or recording position to the video stream to format the video stream; and
recording the information related to time or recording position added to the video stream on a recording medium together with the video stream.

26. A video recording method for formatting a video stream in a predetermined first format to record the formatted video stream on a recording medium, comprising the steps of:
generating information related to time or recording position defined by the first format for the video stream;
adding the information related to time or recording position defined by the first format to the video stream to format the video stream in the first format;
generating information on time or recording position defined by a second format different from the first format for the video stream;
adding the information related to time or recording position defined by the second format to the formatted video stream; and
recording the information related to time or recording position added to the formatted video stream on a recording medium together with the formatted video stream.

27. A video recording/reproducing method comprising the steps of:
converting information related to time or recording position defined by a format in accordance with the type of a recording medium for a video stream recorded on said recording medium in said format into information related to time or recording position defined by the type of another recording medium; and
adding the converted information related to time or recording position to the video stream to convert the format of the video stream.

28. A video recording/reproducing method for formatting a video stream in a predetermined format to record the formatted video stream on a recording medium, and for reproducing a video stream recorded on the recording medium, said method comprising the steps of:
creating a play list file built in a file form independent of the video stream for specifying an order of reproducing video streams recorded on the recording medium;
generating information related to time or recording position defined by the format for the video stream;
adding the information related to time or recording position to the video stream to format the video stream;
adding the play list file to the formatted video stream; and
recording the formatted video stream on a recording medium together with the play list file.

29. A video recording method for recording a video stream on a recording medium, comprising the steps of:
setting a format in accordance with the video stream or with the type of the recording medium;
generating information related to time or recording position defined by the format for the video stream;
adding either the information related to time or recording position to the video stream or the information related to time or recording position defined by the format for the video stream; and
recording the formatted video stream on a recording medium.

30. A computer program for causing a computer to record a video stream on a recording medium, comprising:
a first instruction for causing the computer to generate a plurality of pieces of information related to time or recording position defined by respective formats different from one another for the video stream;
a second instruction for causing the computer to add the plurality of pieces of information related to time or recording position to the video stream to format the video stream; and
a third instruction for causing the computer to record the information related to time or recording position added to the video stream on a recording medium together with the video stream.

31. A computer program for causing a computer to record a video stream on a recording medium, comprising:
a first instruction for causing the computer to generate information related to time or recording position defined by a predetermined first format for the video stream;
a second instruction for causing the computer to add the information related to time or recording position defined by the first format to the video stream to format the video stream in the first format;
a third instruction for causing the computer to generate information related to time or recording position defined by a second format different from the first format for the video stream;
a fourth instruction for causing the computer to add the information related, to time or recording position defined by the second format to the formatted video stream; and
a fifth instruction for causing the computer to record the information related to time or recording position added to the formatted video stream on a recording medium together with the formatted video stream.

32. A computer program for causing the computer to convert a video stream recorded on a recording medium in a format in accordance with the type of the recording medium into another format, said program comprising:
a first instruction for causing the computer to convert information related to time or recording position defined by the format for the video stream into information related to time or recording position defined by a format in accordance with the type of another recording medium; and
a second instruction for causing the computer to add the converted information related to time or recording position to the video stream to convert the format of the video stream.

33. A computer program for causing a computer to record a video stream on a recording medium and to reproduce a video stream recorded on the recording medium, said program comprising:
a first instruction for causing the computer to create a play list file built in a file form independent of the video stream for specifying an order of reproducing video streams recorded on the recording medium;
a second instruction for causing the computer to generate information related to time or recording position defined by a predetermined format for the video stream;
a third instruction for causing the computer to add the information related to time or recording position to the video stream to format the video stream;
a fourth instruction for causing the computer to add the play list file to the formatted video stream; and
a fifth instruction for causing the computer to record the formatted video stream on a recording medium together with the play list file.

34. A computer program for causing a computer to record a video stream on a recording medium, said program comprising:
a first instruction for causing the computer to set a format in accordance with the video stream or with the type of the recording medium;
a second instruction for causing the computer to generate information related to time or recording position defined by the format for the video stream;
a third instruction for causing the computer to add the information related to time or recording position to the video stream to format the video stream; and
a fourth instruction for causing the computer to record the formatted video stream on a recording medium.
